# EUROPEAN PATENT SPECIFICATION

(11) **EP 1 083 769 B1**
(45) Date of publication and mention of the grant of the patent: **09.06.2010**
(21) Application number: 00903984.3
(22) Date of filing: 16.02.2000
(51) Int. Cl.: H04R 3/00, H04R 25/00

(54) **SPEECH CONVERTING DEVICE AND METHOD**
SPRACHE UMWANDLUNG GERÄT UND VERFAHREN
DISPOSITIF DE CONVERSION DE LA PAROLE ET PROCEDE CORRESPONDANT

(30) Priority: 16.02.1999 JP 3755899; 16.02.1999 JP 3755999
(43) Date of publication of application: 14.03.2001
(73) Proprietor: Yugen Kaisha GM & M, Tokyo 160-0004 (JP)
(72) Inventor: OBA, Toshihiko, Suginami-ku, Tokyo 167-0041 (JP)
(74) Representative: DeVile, Jonathan Mark
(86) International application number: PCT/JP2000/000872
(87) International publication number: WO 2000/049834

(56) References cited:
- EP-A1- 0 872 808
- WO-A-97/29482
- WO-A1-91/03913
- GB-A- 2 256 959
- JP-A- 10 290 498
- JP-A- 61 264 882
- JP-A- 61 273 100
- US-A- 4 425 481
- US-A- 5 283 833
- US-A- 5 326 349
- US-A- 5 839 109

## Description

### Technical Field

This invention relates to a speech transformation method and apparatus in which the speech as detected by e.g., a microphone, is processed and converted to a form that can be understood more readily by hearing-impaired persons, as a user, for presentation, or in which the speech enunciated by persons with voice-speech disorders or the speech enunciated by an auxiliary device or means used for remedying the speech and voice disorders, such as speech production substitutes for laryngectomized persons, is processed or converted for outputting.

### Background Art

Up to now, there are known an air-conduction type and bone-conduction type HAs (hearing aids). Insofar as the processing method is concerned, there are an analog type HA (linear-type, non-linear-type (K-amplifier), compression-type) and a digital HA. The HA is of a variety of different types. (box, behind-the-ear, CROS (contra-lateral routing of signal), in-the-ear, bone-anchored, etc.) From Kodera's report, there are a large-sized HA for training on a desk or group training, and a small-sized personal HA (see Illustrated Otolaryngology: Kodera K., New Approach-1, Medicalview, 39, 1996).

The digital HA is so constructed that the speech as detected by a microphone is first A/D converted to generate digital data, which then is subjected to e.g., Fourier-transform for generating frequency spectral components, and the amplification factor is calculated, based on the perceptual intensity of the speech, from one frequency component to another. The digital data then is passed through a digital filter for D/A transformation to output the resulting analog data to the user's ear. In this manner, the user may hear the speaker's speech in a noise-reduced state through the digital HA.

A person with voice disorders caused by laryngectomies has lost the phonatory system by vocal cord vibration and has dysphonia.

Among speech production substitutes for laryngectomized persons, there are 1-Artificial materials, e.g., whistle-type artificial larynx using elastic membranes, 2-Buzzer, e.g., electrolarynx, 3-Speech using hypopharyngeal/esophageal mucosa, e.g., esophageal/tracheoesophageal speech, tracheophageal speech using voice-prostheses, 4- Lip-EMG, 5- Trainer of phonation/utterance, e.g., CISTA, 6- Palatograph, 7-Intraoral oscillator.

In the digital HA, only digital data is amplified from one frequency band to another, such that the ambient sound is randomly picked up by the microphone, whilst the noise is directly reproduced to give a disagreeable feeling to the user. That is, no outstanding improvement has been achieved in a variety of audiometries in comparison with the analog HA. The digital HA is not adapted to the processing of the detected speech depending on the bodily state, the using state or the objective of the hearing-impaired persons.

Since speech production substitutes don't rely upon vocal cord vibration prior to laryngectomy, the produced voice is inferior in tone quality and departs from the voice in the normal bodily state.

A speech recognition apparatus is described in US-A-5,839,109 which includes a sound pickup, a storage device, a comparing device, a display pattern storing device, and a display. The apparatus can display non-speech sounds either as a message or as an image, and is therefore especially useful for hearing-impaired individuals.

A speech recognition device is described in GB-A-2 256 959 which converts the inarticulate sounds a severely physically disabled person is able to make into normal intelligent conversation. It does this by allowing pre-recorded words and phrases to be selected from a display screen by a code made up from a few simple sounds spoken into a microphone.

### Disclosure of the Invention

Various aspects and features of the present invention are defined in the claims. Embodiments of the present invention seek to provide a speech transformation method and apparatus whereby the results of speech recognition can be presented depending on the bodily state, the using state or the objective of using of the hearing-impaired persons.

Another embodiment of the present invention seeks to provide a speech transformation method and apparatus whereby a person with voice-speech disorders ascribable to laryngectomy, tongue/mouth-floor resection or articulation disorder is able to utter with spontaneous speech proper to the user or subject to spontaneous transformation and whereby the external speech is outputted to the user to enable spontaneous conversation.

For accomplishing the above, embodiments of the present invention provide a speech transformation apparatus including acousto-electric transducing means for detecting the speech to generate speech signals, recognition means for performing speech recognition processing using the speech signals from the acousto-electric transducing means, transforming means for working on and transforming the result of recognition from the recognition means depending on the bodily state, the using state or the using objectives of a user, output control means for generating a control signal for outputting the result of recognition recognized by the recognition means and/or the result of recognition obtained on working and transformation operations by the transforming means, and output means for outputting the result of recognition recognized by the recognition means and worked on and transformed by the transforming means based on the control signal generated by the control means to present the result of recognition to the user.

For accomplishing the above, embodiments of the present invention also provide a speech transformation method including detecting the speech to generate speech signals, performing speech recognition processing using speech signals from acousto-electric transducing means, working on or transforming the result of recognition depending on the bodily state, the using state or the using objectives of a user, generating a control signal for outputting the result of recognition and/or the result of recognition worked on or transformed, and outputting the result of recognition worked on or transformed based on the control signal for presentation to the user.

Other objects and advantages according to embodiments of the present invention will become clearer from the following explanation of the example embodiment and the claims.

### Brief Description of the Drawings

Fig. 1 is a perspective view showing an example of the appearance of an HA (hearing aid) of the present invention.
Fig.2 is a block diagram showing the structure of the HA of the present invention.

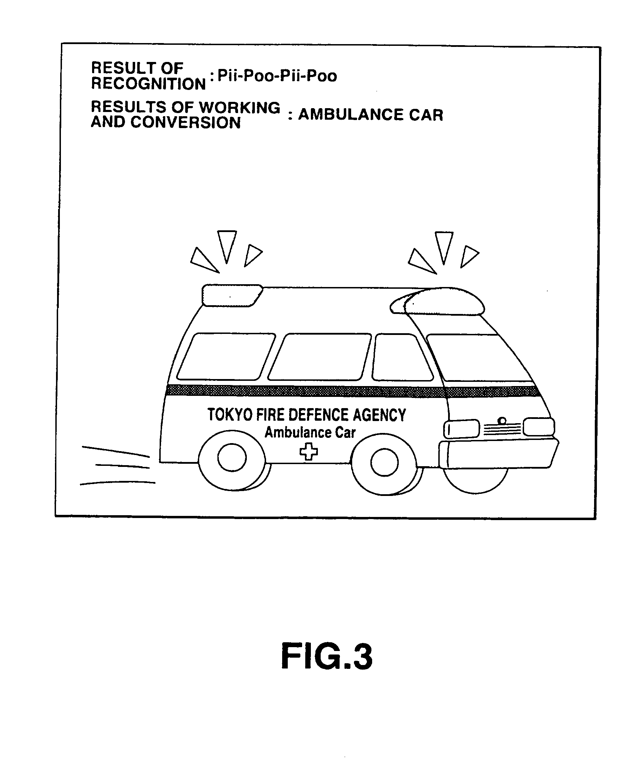

Fig.3 illustrates an example of displaying the results of recognition and the results of working and transformation in a display unit of the HA of the present invention.
Fig.4 illustrates an example of displaying the results of working and transformation in a display unit of the HA of the present invention.
Fig. 5 illustrates another example of displaying the results of recognition and the results of working and transformation in a display unit of the HA of the present invention.
Fig.6A shows a pattern demonstrated on the display unit when the speech is inputted to the microphone with a pre-set sound volume.
Fig.6B shows a pattern demonstrated on the display unit when the speech is inputted to the microphone with a sound volume smaller than the pre-set sound volume.
Fig.7 is a block diagram for illustrating a structure for creating an augmented reality by the HA of the present invention.

### Best mode for Carrying out the Invention

Referring to the drawings, preferred embodiment of the present invention will be explained in detail.

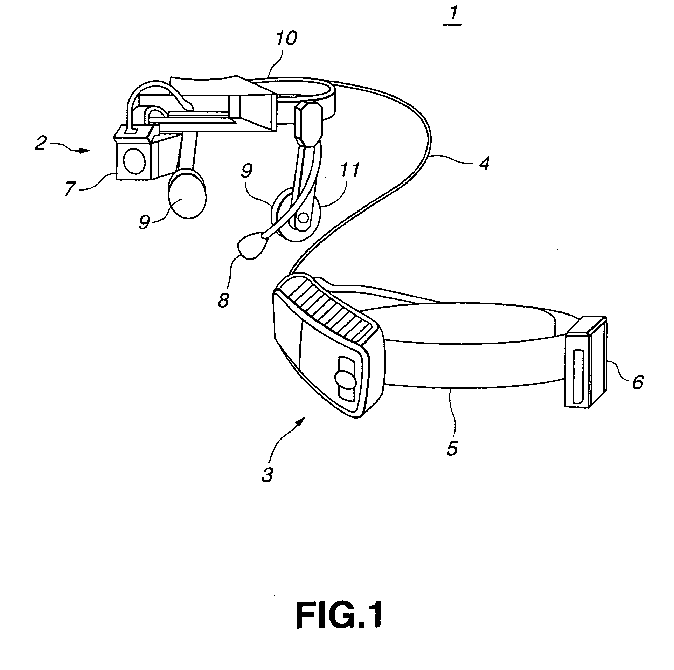

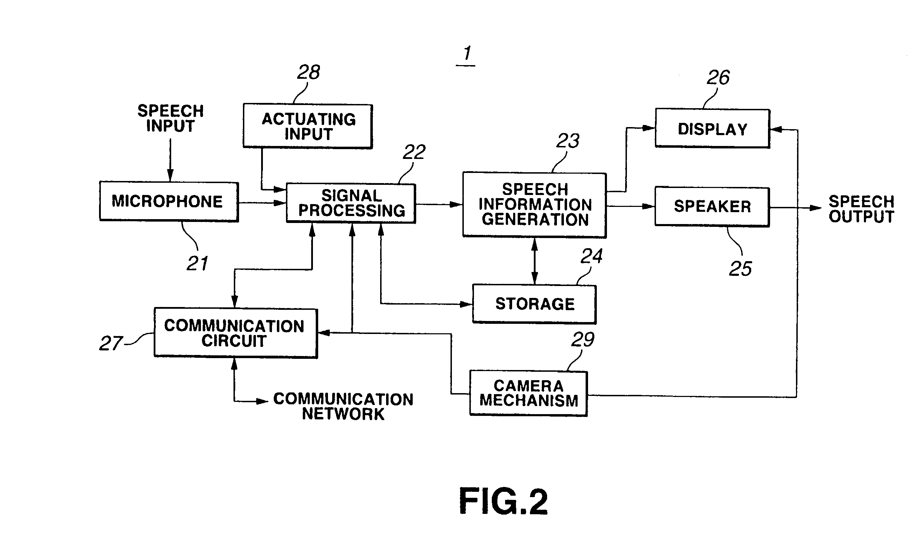

The present invention is applied to an HA (hearing aid) 1 configured as shown for example in Figs.1 and 2. This HA 1 is of a portable type and includes an HMD (head-mounted display) 2, and a computer unit 3 for speech recognition and for generation of the speech information, interconnected over an optical fiber cable 4, as shown in Fig. 1. The computer unit 3 is annexed to a support 5 worn on e.g., a user's waist, and is driven by power supplied from a battery 6 annexed to the support 5, while driving the HMD 2.

The HMD 2 is made up of a display unit 7, arranged just ahead of the user's eye, a microphone for a user 8 for detecting the user's speech, a speech outputting unit 9 for outputting the speech to the user, a support 5 for carrying the above components so that these components are carried on the user's head, and a microphone for outside 11 for detecting the speech etc. from outside.

The display unit 7, arranged just ahead of the user's eye, demonstrates the meaning or the contents of the speech detected by the microphone for a user 8 or by the microphone for outside 11 which will be explained subsequently. It is also possible for the display unit 7 to demonstrate not only the meaning and the contents of the speech as described above but also the other information responsive to commands from the computer unit 3.

The microphone for a user 8 is arranged in the vicinity of the user's mouse to detect the speech uttered by the user. The microphone for a user 8 transduces the user's speech into electrical signals which are outputted to the computer unit 3.

The microphone for outside 11 is arranged on a lateral side of the speech outputting unit 9 formed as a round plate. This microphone for outside 11 detects the speech from outside to transduce the detected speech into electrical signals which are similarly outputted to the computer unit 3.

The microphone for a user 8 and the microphone for outside 11 may be designed as processor for acoustic signals, such as acoustic echo-canceller, a microphone array or a variety of microphones, irrespective of the mounting positions. These microphones may be exemplified by these types (pressure-type, pressure-gradient-type, parametric-type, laser Doppler-type, bone-conduction-type, ultra-small two-way unit picking up air-conduction and bone-conduction sound (manufactured by NTT), non-directional-type, uni-directional (ultra-directional)-type, bi-directional-type, dynamic-type, condenser (electret)-type, zoom-type, stereo-type, MS stereo-type, wireless-type, ceramic-type and magnetic-type).

As the earphone, a magnetic earphone may be used. Any suitable routinely used microphone and earphone may be used in a sound enhancement unit or in the HA. Similarly, any suitable microphone routinely used in a middle ear implant, a cochlear implant, an ABI (auditory brainstem implant), a tactile aid or a bone-conduction ultrasound system, may be used. As the sound collection component for these microphones, echo-cancellers, for example, may be used.

These microphones 8, 11 may be fitted with routinely used gain adjustment units, speech adjustment units or output control devices, such as a maximum output power control system or an automatic recruitment control compression system.

The microphone for a user 8 and the microphone for outside 11 may be formed as one unit, instead of being designed as separate units, as shown in Fig.1.

The support 5 is formed e.g., of an elastic material, such as shape memory alloy, and may be fixed to the user's head to permit the mounting of the display unit 7, microphone for a user 8 and the speech outputting unit 9 at pre-set positions. The support 5, shown in Fig. 1, is designed so that a supporting member is arranged from user's forehead to occipitis to mount the display unit 7 etc. at pre-set positions. The support 5 may, of course, be a so-called headphone type support. The speech outputting unit 9 may be provided on each ear.

The computer unit 3 is annexed to the support 5 worn on e.g., user's waist. This.. computer unit 3 is fed with electrical signals detected and generated by the microphones 8, 11, as shown in Fig.2. This computer unit 3 is provided with a recording medium, which has stored a program for processing electrical signals, a CPU (central processing unit) for recognizing the speech and for generating the speech information in accordance with the program stored in the recording medium, and so on. The computer unit 3 may also be formed integrally with the HMD 2 worn on the user's head, instead of being attached to the user's waist.

The computer unit 3 starts the program stored in the recording medium, based on the electrical signals generated from the speech detected by the microphone for a user 8 and/or the microphone for outside 11 to produce the results of recognition. This permits the computer unit 3 to obtain the contents of the speech detected by the microphone for a user 8 and/or the microphone for outside 11.

Referring to Fig.2, the electrical structure of the HA 1 embodying the present invention the present invention is explained in detail. This HA 1 includes a microphone 21, corresponding to the above-mentioned microphones 8, 11, for detecting the speech to output speech signals, a signal processor 22, which is fed with speech signals generated by the microphone 21 to effect speech recognition, and which is contained in the computer unit 3, and a speech information generating unit 23 which generates the speech information based on the results of recognition from the signal processor 22 and which is contained in the computer unit 3. The HA 1 also includes a storage unit 24 which stores speech data, has its contents read into the signal processor 22 and into the speech information generating unit 23 and which is contained in the above-mentioned computer unit 3, a speech enhancement unit 25 for outputting the speech using the speech information from the speech information generating unit 23, equivalent to the above-mentioned speech outputting unit 9, and a display unit 26 adapted for displaying the contents represented by the speech information using the speech information from the speech information generating unit 23 and which is equivalent to the above-mentioned display unit 7.

The microphone 21 detects the speech uttered by e.g., the speech production substitutes for laryngectomized persons or the speech from outside to generate speech signals derived from the speech. This microphone 21 outputs the generated speech signals to the signal processor 22.

This microphone 21 is mounted in the vicinity of the user's mouth to detect the speech uttered by the user. This microphone 21 also detected the speech from outside to generate speech signals. In the following explanation, the microphone detecting the user's speech is termed the microphone for a user 8 as before, the microphone detecting the speech from outside is termed the microphone for outside 11, again as before. When the two microphones are referred to collectively, each is simply termed a microphone.

The signal processor 22 performs speech recognition using speech signals from the microphone 21. This signal processor 22 executes speech recognition processing by executing the processing according to a program used for performing the speech recognition processing and which is stored e.g., in an internal memory, not shown. Specifically, this signal processor 22 generates sampled speech of the user and performs the processing of recognizing the speech signals from the microphone 21 as a language by having reference to the speech data held in the storage unit 24. Resultingly, the signal processor 22 generates the results of recognition consistent with the speech signals from the microphone 21.

This signal processor 22 performs the speech recognition processing by the classification by the speech to be recognized and the classification by the speaker to be recognized. In the speech recognition processing by the classification by the speech to be recognized, there are the isolated word recognition and the continuous speech recognition. In the continuous speech recognition in the signal processor 22, there are continuous word recognition, sentence speech recognition, conversational speech recognition and speech understanding. In the speech recognition processing by the speaker to be recognized, there are speaker independent speech, speaker dependent speech and speaker adaptive speech. Among the techniques of speech recognition, performed by the signal processor 22, there are those by dynamic programming matching, speech characteristics and by hidden Markov models (HMMs).

Using the input speech, the signal processor 22 perfonns speaker recognition, speaker identification and speaker verification. At this time, the signal processor 22 generates the results of speaker recognition, using the processing of extracting the features of the speech from the speaker and the frequency response of the speech to output the generated results of speaker recognition to the speech information generating unit 23. The signal processor 22 performs speaker independent recognition, using a method employing characteristic values with little variations with speakers, a multi-template method or a statistic technique. As examples of the speaker adaptive speech, there are one by normalization of the individual differences, one by correlation of speech data among speakers, one by model-parameter innovation and one by speaker selection. The signal processor 22 performs the above-described speech recognition depending on the bodily state, the using state and the using objective of the user.

The user's bodily state may be e.g. the degree of the user's hearing impairment state or speech disorder state, whilst the using state may be e.g. the environment under which the user employs the HA 1, such as indoor/outdoor using state or the using state in a noisy environment. The using objective is the objective with which the user exploits the HA 1, such as improvement in recognition or promotion of the understanding by the user. The using objective may be exemplified by the conversation with routine partners of conversation, conversation with indefinite conversation partners, listening or viewing music, such as opera or songs, listening to the lectures and by conversation with those with speech impairment.

The signal processor 22 also has the function of memorizing and learning the speech inputted to the microphone 21. Specifically, the signal processor 22 holds wavefonn data of the speech detected by the microphone 21 for use in subsequent speech recognition. This improves speech recognition by the signal processor 22 further. Moreover, the signal processor 22, having the learning function, is able to render the output results more accurate.

In the storage unit 24 are held data representing a speech model compared to the speech waveform, generated on detection of the input speech, when the signal processor 22 recognizes the input speech.

In the storage unit 24, there are also held, as speech data, the speech of the user having the phonation system by vocal cord vibration prior to laryngectomy, and data obtained on previously sampling the speech desired to be outputted.

In the storage unit 24 is also held an image read out by the speech information generating unit 23 based on the results of recognition and/or the results of recognition obtained on working and transformation. The image stored in the storage unit 24 is such an image which represents a pattern symbolizing the results of recognition, or such an image representing a pattern which might help a user to intuitively understand the results of recognition.

Among data recorded on the storage unit 24, there are pictures, symbols, letters, notes, photos, moving pictures, animations, illustrations, voice-spectrogram-pattern and colors, as image types of objects presented as images.

The speech information generating unit 23 generates the speech information, using the results of recognition from the signal processor 22 and speech data indicating the user's speech and which is held in the storage unit 24. At this time, the speech information generating unit 23 is responsive to the results of recognition to combine the speech data stored in the storage unit 24 and works on or transforms the results of recognition to generate the speech information. At this time, the speech information generating unit 23 generates the speech information, using the enclosed CPU and the speech information generating program.

The speech information generating unit 23 also analyzes the speech, using the results of recognition, to re-construct the speech data, responsive to the contents of the analyzed speech, to generate the speech information representing the speech. The speech information generating unit 23 outputs the generated speech information to a speech enhancement unit 25 and to a display unit 26.

The speech information generating unit 23 works on, transforms or synthesizes the results of recognition from the signal processor 22, depending on the bodily state, the using state or the using objectives of the user. The speech infonnation generating unit 23 also performs the processing of presenting the speech detected by the microphone 21 to the user on the results of recognition or the results of recognition obtained on working etc.

It is also possible for the speech information generating unit 23 to modify the speech information generated from the results of recognition to generate the new speech information. At this time, the speech information generating unit 23 annexes words or phrases more familiar to the user, based on the bodily state, the using state or the using objectives of the user, to improve further the speech recognition by the user. For example, if "Big Mac" is inputted to the microphone 21, the speech information generating unit 23 doing this processing generates e.g., the speech information indicating "MacDonald's Big Mac (Trademark)".

When outputting the speech information to the display unit 26, the speech information generating unit 23 outputs the meaning and the contents of the speech as an image to the display unit 26. If, at this time, the speech of the user or the speaker as a partner of the user and the speech from outside are inputted to the speech information generating unit 23, such that the result of recognition indicating an object is inputted as the result of recognition from the signal processor 22, the speech information generating unit 23 reads out the image data indicating the object from the storage unit 24 to output and demonstrate the image data on the display unit 26.

The speech information generating unit 23 is responsive to the results of recognition from the signal processor 22 to re-output the speech information previously outputted to the speech enhancement unit 25 or to the display unit 26. If, after outputting the speech information, the speech information generating unit 23 has verified that the result of recognition indicating the speech uttered by the user or by the speaker as a conversation partner to the user desirous to re-hear the speech information has been inputted, the speech information generating unit 23 performs the processing of re-outputting the speech information outputted to the speech enhancement unit 25 or to the display unit 26. It is also possible for the speech information generating unit 23 to output the speech information any desired number of times on end.

It is also possible for the speech information generating unit 23 to re-output the speech information previously outputted to the speech enhancement unit 25 or to the display unit 26, based on the processing of extracting the characteristics of the speech from the speaker as a partner to the user or on the results of speaker recognition exploiting the frequency response of the speech. It is similarly possible for the speech information generating unit 23 to have a spoken dialogue using the function of an AI (artificial intelligence) to re-output the speech information once outputted to the speech enhancement unit 25 or to the display unit 26.

It is moreover possible for the speech information generating unit 23 to switch between performing and not performing the operation of re-outputting responsive to an operational command from an actuating input unit 28. That is, switching between performing and not performing the operation of re-outputting by the user is determined by acting on the actuating input unit 28, with the actuating input unit 28 then being used as a switch.

Moreover, when re-outputting the speech information, this speech information generating unit 23 also selects whether the previously outputted speech information is to be re-outputted or the speech information different from the previously outputted speech information is to be outputted, depending on the actuating input signal inputted via the signal processor 22 from the actuating input unit 28.

The display unit 26 displays the speech generated by the speech information generating unit 23 and the image photographed by a camera system 29.

The actuating input unit 28, acted on by the user, generates an actuating input signal. This actuating input unit 28 may be implemented by, for example, a switch, a keyboard, a mouse, an internet-pad (RF-wireless system) and a wearable operative interface (prototype: finger and hand position, motion-measuring pointing-input gesture-input (Olympus)).

The above-described HA 1 is able to perform processing adapted to an individual user by recognizing the speech detected by the microphone 21 by the signal processor 22 to start a program by the speech information generating unit 23 based on the results of recognition. This enables the HA 1 to output the speech from the microphone 1 to the speech enhancement unit 25 as well as to display the speech on the display unit 26, thus improving the speech recognition by the user.

This and the following reports, namely MuGurk effect (The mis-auding emerges when the contradictory phonological information is presented from visual sense and auditory sense simultaneously (see "Hearing lips and seeing voice" MuGurk H., MacDonald J., Nature 264,746-8,1976)), Kuhl's report (The correspondence between the voice information from auditory sense and the information of the oral formation from visual sense in infants (see "Human processing of auditory-visual information in speech perception" Kuhl P.K., et al., ICSLP 94 S11.4, Yokohama, 1994)), the ventriloquial effect (The visual sense may affect the sense related to sound source), and people leaning and distinguishing the real or false sound source unconsciously, support that the human communication inherently is multi-modal (see Visual and aural perception: Sato H., Mori T., Ohmsha, 119-20, 1999).

The hearing impairment of an adult proceeds with age, such that disorder in the internal ear, lowering in speech discrimination, central deafness and mis-hearing occur more frequently. In the hearing impairment over 100dB, lip-reading becomes predominant, with the audition being assistive, such that many hearing-impaired persons don't use HAs. There is a case in which the hearing impairment becomes worse when a maximum output of the HA is higher for persons with serious hearing impairment. After the operation for a middle ear implant, cochlear implant or ABI, it is reported that, depending on particular cases, the audition cannot be improved as expected, while many claims are laid that, even though the speech sound is heard, the speech contents cannot be understood. But lip-reading and dactylology are difficult to learn by adults.

The audition is the comprehensive concept which encompasses the low-stage function of the peripheral auditory organ and the high-stage function of perception and cognition in the brain. The hearing is the auditory acuity by the audiometry. If assumed that the major objective in wearing the HA is to promote voice-speech communication, it is crucial to cognize what has been said by the partner of conversation and to which extent the speech of the partner has been understood.

The conventional HA, cochlear implant etc. are mainly aimed at complementing the hearing power. The HA 1, in which the concept of cognition by the visual sense is added, may be thought of as supplementing the perceptual sense. It has been reported that display on a screen and feedback by speech improves speech recognition of a hearing-impaired person (see "Aging of speech listening ability" Yanagida M., Tech. report of IEICE, SP96-36 1996-07, 25-32, 1996).

It may be seen from above that the recognition by the auditory sense is intimately related to the visual sense, such that, by using the visual sense, the speech contents can be recognized more satisfactorily. So, if the speech is not enhanced to a maximum output, the speech contents can be recognized to improve the user's contented feeling. The HA 1 is also effective in the auditory training of hearing-impaired children.

So, the speech information may be complemented by demonstrating the results of recognition etc. on the display unit 26 to improve the recognition of the speech by the user. In the HA 1, the meaning and the contents of the speech may be transmitted to the speaker through the images demonstrated on the display unit 26 as well as the speech to enable the dialogue.

With this HA 1, since the meaning and the contents of the speech demonstrated on the display unit 26 and the contents of the speech outputted from the speech enhancement unit 25 can be changed depending on the results of recognition of the speech, as detected by the microphone for a user 8 and the microphone for outside 11, the speech recognition by the user can be improved further. Thus, with the present HA 1, in which the processing for recognition is changed depending on the physical state, such as the extent of hearing impairment, the using state or the using objective of the user, by executing the program for changing the speech recognition processing by the speech information generating unit 23, the semantic information of the speech may be displayed in a manner intelligible to the user, and hence the recognition may be improved further.

The speech enhancement unit 25 outputs the speech generated by the speech information generating unit 23. The speech enhancement unit 25 may be designed so that the speech will be outputted from the user to the speaker, so that the speech enunciated by the user will be transmitted to the user's ear, or so that the speech will be outputted from the speaker to the user or to the speaker.

The speech enhancement unit 25, adapted for outputting the speech to the user's ear, may be of the dynamic speech enhancement transducing system or electro-static speech enhancement transducing system (capacitor or electrostatic type), and of the shape of a headphone such as the in-the-air type (open-air, closed or canal type). On the other hand, the speech enhancement unit 25 may be that used in a conventional HA, speech enhancement unit or sound collector speaker, may be of the type employing a magnetic loop or may be of a microphone speaker system employing fingers (prototype: Whisper (NTT Docomo)). After all, the speech enhancement unit 25 outputting the speech from the user to the speaker may be any suitable conventionally used speech enhancement unit or speaker.

It is also possible for the speech enhancement unit 25 to output the sound oppositely phased to the speech outputted on the basis of the speech information. This eliminates noise components contained in the speech outputted by the speech enhancement unit 25 to output the speech corrupted to a lesser extent with noise to the user and/or to the speaker.

This HA 1 includes a communication circuit 27 connected to an external communication network. This communication circuit 27 is fed with the speech enunciated by e.g., a person with voice-speech disorders or with the speech form outside over a communication network, examples of which are given below: telephone networks (ISDN, ADSL, xDSL), FAX, telex, mobile communication network (CDMA, WCDM, GSM, PHS, Pager-net (DARC (FM-teletext), high-speed-pager, FM-pager), IMT2000, PCS, MMAC, IRIDIUM, servicing network (i-mode:NTT Docomo)), internet (ASP :application service provider), LAN, radio communication network (AM/FM-system, TV-comnunication, Bluetooth, infrared radiation IrDA, ultrasound, amateur-radio, cable-network, such as Osaka-usen-houso, satellite communications (BS/CS), optical-communication, cable networks, etc). The communication circuit 27 inputs data indicating the speech to the signal processor 22. The communication circuit 27 also outputs the signal processed by the signal processor 22 or the speech information generated by the speech information generating unit 23 etc. to the external network, while being fed from the external network with the processed information and with the information of the contents which modify or control the internal processing in the HA 1.

With the communication circuit 27, the television broadcast (digital broadcast), teletext or text-radio, received over the signal processor 22 and the speech information generating unit 23, may be demonstrated on the display unit 26. It is noted that the communication circuit 27 includes a tuner function for receiving the teletext etc. to receive data desired by the user.

With the HA 1, constructed as described above, if the speech uttered using an electro-larynx for laryngectomized persons is fed to the microphone 21, since the speech is recognized by the signal processor 22, and the speech information indicating the speech outputted by the speech information generating unit 23 is generated using the speech data indicating the speech sampled prior to laryngectomy and which has been stored in the storage unit 24, the voice of the speech outputted from the speech enhancement unit 25 is approximate to the user's voice prior to laryngectomy.

In the foregoing explanation of the HA 1 according to the present invention, the speech is uttered by a laryngectomized person and is detected by the microphone 21. The HA 1 may, however, be applied to the case of detecting the speech of a person suffering articulation disorder, among the speech disorders caused by hearing impairment, or the voice of a person undergoing artificial respiration. In this case, the HA 1 holds the speech of the person suffering speech disorder in the storage unit 24 and, responsive to the phonation by the enunciating person, references to the memorized speech data in the storage unit 24, indicating the speech by the enunciating person, to execute speech recognition processing in the signal processor 22 to combine the speech data in the speech information generating unit 23 responsive to the results of recognition to generate the speech information to output the speech free of the speech disorder from the speech enhancement unit 25 as well as to display the speech contents derived from the speech information on the display unit 26.

Thus, with the present HA 1, the speech enunciated by the laryngectomized person by the speech production substitute is demonstrated on the display unit 26 to correct the unnatural speech.

A person suffering articulation disorders due to, for example, hearing impairment, utters "kyon-wa-" instead of the correct pronunciation "kyou-wa" for "today is" due to the absence of voice feedback. However, if, with the use of the HA 1, the above-described processing is carried out, the incorrect pronunciation is corrected to normal pronunciation "kyou-wa" which is outputted at the speech enhancement unit 25.

Moreover, since the present HA 1 is provided with the display unit 26, the meaning and the contents of the speech of the enunciating person may be demonstrated to provide a system convenient for speech training and leaning by the person with voice disorders or hearing-impaired persons.

Several examples of working or transformation, in which the results of recognition from the signal processor 22 are worked on or transformed by the speech information generating unit 23 to generate the speech information or to combine the speech data, are hereinafter explained. It is noted that the several examples such as transformation processing given below are merely illustrative of the preferred embodiments of the invention.

When transforming the results of recognition from the signal processor 22, the speech information generating unit 23 is able to work on or transform the results of recognition to generate the speech information using the technique of AI. The speech information generating unit 23 uses a speech dialogue system, as an example. Meanwhile, an aged user suffering hearing impairment sometimes re-queries the speaker as to what has been spoken by the speaker. However, if this system is used to work on and transform the results of recognition, the HA 1 has a dialogue with the user so that the information on what has been said by the speaker and saved may be obtained to improve the speech recognition by the user to save of the labor involved in re-enquiries.

Such system may be realized using a speech dialogue system with expressions as a multi-modal dialogue system. This multi-modal dialogue system employs, as modalities, a direct operation pen gesture technique, as an input technique employing the pointing device and the tablet, a text inputting technique, a speech input/output technique, such as speech recognition, a VR (virtual reality) constituting technique, employing visual, auditory, touch, or force sense, or a non-verbal modality technique, in combination. The speech information generating unit 23 at this time employs respective modalities as means for supplementing the speech information, dialogue context information or its complementing means, or as means for relieving the cognizing load or psychological resistance otherwise imposed on the user. As the non-verbal interface, a gesture interface may be used. In this case, gesture tracking is required for gesture measurement by a worn type sensor, as gesture interface measurement. To this end, a globe-type device, magnetic or optical position measurement may be used. For non-contact gesture measurement, an image which stereoscopically analyzes a marker or an image obtained on 3D-reconstruction may be used.

Meanwhile, this multi-modal dialogue system is described in detail in ("Speech dialogue with facial displays.-Multimodal human-computer conversation-" Nagao K., Takeuchi A., Proc. 32nd ann. meeting of the association for computational linguistics, 102-9, Morgan Kaufmann Publishers, 1994 ; "Communicative facial displays as a new conversational modality" Takeuchi A., Nagao K., Proc. ACM/IFIP conf. on human factors in computer systems (INTERCHI 93), 187-93, ACM Press, 1993)

As this speech dialogue system, employing the AI function, the speech detected by the microphone 21 is processed with A/D conversion, acoustic analysis and vector quantization by the signal processor 22, and an optimum hypothesis of the word level having upper score is generated by a speech recognition module. The speech information generating unit 23 presumes phonemes from the vector quantization code, using the HMM based phoneme model, to generate a string of words. The speech information generating unit 23 converts the generated word string into the meaning expression by a sentence construction and meaning analysis module. At this time, the speech information generating unit 23 analyzes the sentence structure, using unified grammar, and then resolves ambiguities using a frame-based knowledge base and an instance base (a sentence pattern obtained on analyzing an exemplary sentence). After determining the meaning and contents of the phonation, the intention of the user is recognized by a plan recognition module. This is based on the belief model by a user which is dynamically corrected and expanded as the dialogue proceeds and on a plan concerning the goal of the dialogue. In the intention recognizing module, the subject is supervised pronoun correspondence is resolved and the abbreviated portions are supplemented. There is started a module which generates concordant response based on the user's intention. This module embeds the information concerning the response obtained by the areal knowledge in a phonation pattern of a template provided at the outset to generate the phonation. This response is turned into speech by the speech synthesis module. Meanwhile, the processing executed by the signal processor 22 and the speech information generating unit 23 may be the processing stated in, for example, "A preferential constraint satisfaction technique for natural language analysis" Nagao N., Proc. 10th Euro. conf. on artificial intelligence, 523-7, John Wiley&Sons, 1992 ; "Natural language processing and its applications" Tanaka H., IEICE, 330-5, Corona Publishing, 1999 ; "Abduction and dynamic preference in plan-based dialogue understanding" Nagao K., Proc. 13th int. joint conf. on artificial intelligence, 1186-92, Morgan Kaufmann Publishers, 1993.

As the processing exploiting the AI function, the speech information generating unit 23 performs system impersonation, to perform speech recognition, sentence construction, meaning analysis, plan recognition, expression parameter adjustment and expression animation, using the display unit 26, to mitigate the load in recognition and psychological resistant feeling on the user with respect to the speech dialogue using visual means. As the processing performed by the speech information generating unit 23, there is FACS (Facial Action Coding System). See also Facial Action Coding System: Eckman P., Friesen W.V., Consulting Psychologists Press, Palo Alto. Calif, 1978.

the speech information generating unit 23 is a spoken dialogue system, which is an AI system employing the speech and the image. This AI system comprises an incremental utterance understanding in real-time spoken language ("Understanding unsegmented user utterances in real-time spoken dialogue systems" Nakano M., Proc. of 37th ann. meeting of the association for computational linguistics, 200-7), and incremental utterance production, the contents of which can be changed sequentially ("A computational model of incremental utterance production in task-oriented dialogue" Dohsaka K., Shimazu A., Proc. of 16th int. conf. on computational linguistics, 304-9, 1996 ; "System architecture for spoken utterance production in collaborative dialogue" Dohsaka K., Shimazu A., Working Notes of IJCAI 1997 Workshop on Collaboration, Cooperation and Conflict in Dialogue Systems, 1997 ; "Corpus analysis of collaborative principles in different dialogue domains" Dohsaka K., et al., IEICE tech. report NLC-97-58, 25-32, 1998). See "DUG-1 -A spoken dialogue system with flexible turn-taking" Nakano M., et al, Proc. of 5th ann. meeting of NLP, 161-4, 1999. It is noted that, in the speech information generating unit 23, the process of understanding and that of response operate in parallel. The speech information generating unit 23 also sequentially sends word candidates, simultaneously with speech recognition, to the speech processor, using ISTAR-protocol (see "Implementation of coordinative nodding behavior on spoken dialogue systems" Hirasawa J., ICSLP 98, 2347-50, 1998).

That is, the HA 1 recognizes the speech from the user and/or from outside, in terms of a pre-set data volume (sentence paragraph) as a unit, by employing the technique used in the speech dialogue system DUG-1, manufactured by NTT. The HA 1 also performs the processing of generating the speech information. The speech information generating unit 23 is able to incidentally stop or start the speech recognition processing and the speech information recognition processing, responsive to the speech from the user and/or from outside, thus realizing efficient processing. Moreover, since this HA 1 is able to control the speech recognition processing and the speech information generating processing, responsive to the user's speech, speaker change can be realized flexibly. That is, the processing can be changed by detecting the speech from the user and/or from outside during generation of the speech information to change the contents of the speech information to be presented to the user.

The speech information generating unit 23 is also able to perform the processing for understanding the free phonation of the user using a keyword spotting. (See "Spontaneous speech dialogue TOSBURG-II towards the user-centered multi-model interface" Takabayashi Y., IEICE trans. J77-D-II No.8, 1417-28, 1994).

The speech information generating unit 23 is also able to transform the speech information e.g., with intonation, stressing or accentuation, to output the so-transformed speech information. At this time, the speech information generating unit 23 transforms the speech information to change the intensity of the intonation, stressing or accentuation of a particular pronunciation, as necessary, to output the so-transformed speech information.

The prosody control system may use words and text prosody as data base (see for example "On the control of prosody using word and sentence prosody database" Nukaga N., et al., 1998 Meeting of ASJ Society of Japan, 227-8, 1998).

When synthesizing speech data, the speech information generating unit 23 is able to execute speech synthesis by rule, speech synthesis employing variable length unit to synthesize the smooth speech, prosody control to produce natural speech on synthesis or quantizing conversion for furnishing the speech with personality, irrespective of the speech contents, in order to generate the speech information (see "A perspective in automatic telephone interpretation" Advanced Telecommunication Res. Ins. ATR Advanced Tech. Series, Ohmsha, 177-209, 1994).

The high sound quality speech can also be synthesized using a vocoder, which is STRAIGHT (speech transformation and representation technique based on adaptive interpolation of weighted spectrogram) (see "Voice Conversion with STRAIGHT" Maeda N., et al., Tech. report of IEICE, EA98-9, 31-6, 1998).

Moreover, with the present speech information generating unit 23, the information on the speech contents (rhythmic information) or the information on the sound pitch or sound volume (prosody-related information) can be adjusted to the sound pitch easiest to hear to the user, in keeping with the properties of the user's hearing impairment, by exploiting the text-to-speech synthesis of creating the speech from the letter information. In addition, the speech information generating unit 23 performs the transformation of characteristic speech quantities, such as by voice speed conversion or frequency compression. In addition, the speech information generating unit 23 applies frequency band expansion for adjusting the frequency band of the output speech or speech enhancement processing to the speech information. The frequency band expansion or speech enhancement may be realized using the techniques described e.g., in "Speech modification methods for fundamental frequency, duration and speaker individuality" Abe M., Tech. report of IEICE, SP93-137, 69-75, 1994). Instead of the signal processor 22 and the speech information generating unit 23 doing speech recognition processing and transforming or working on the results of recognition, it is possible for the signal processor 22 and the speech information generating unit 23 to perform only the above processing to output the result to the speech enhancement unit 25. It is also possible for the HA 1 to output the results o the recognition and/or the result of the above processing simultaneously or with a time lag. It is also possible for the HA 1 to output result of recognition and/or the result of the processing so that different contents will be outputted at the speech enhancement unit 25 or the right-and-left channels of the display unit 26.

It is also possible for the speech information generating unit 23 not only to perform the processing of interpreting the language from the speech, using the result of recognition, and of constructing the speech information from the speech data using the so-interpreted language, but also to perform the processing of working on or transforming the language from other processing interpreted on the basis of the results of recognition. That is, it is possible for the present speech information generating unit 23 to construct the speech information and to perform the voice speed conversion of changing the rate of outputting the speech information at the speech information generating unit 23, such as by elongating the voiced domain by splitting or elongating the pitch domain, not working on the invoiced domain, or shortening the non-speech domain.

Moreover, it is possible for the speech information generating unit 23 to perform e.g., interpretation processing, such as transformation of the speech information from Japanese to English, responsive to the results of recognition to output the transformed information. This technique may be applicable to automatic telephone interpretation in conjunction with the function of communication. It is also possible for the speech information generating unit 23 to perform automatic abstraction for summary transformation (e.g., United States of America to USA) to output the speech information.

Other examples of the automatic abstraction performed by the speech information generating unit 23 include generating type processing of picking up from the sentences a cue expression which might be helpful in preparing an abstract to generate an understandable sentence (see "Generating summaries of multiple news articles" Mckeown K., Radev D.R., In Proc. of 14th ann. int. ACM SIGIR conf. on res. and development in information retrieval, 68-73, 1995 ; "Automated discourse generation using discourse structure relations" Hovy E., Artificial Intelligence, 63, 341-85, 1993), and extraction type processing of processing an abstract as slicing and of setting a problem to enable subjective evaluation (see "A trainable document summarizer" Kupiec J., et al., In Proc. of 14th ann. int. ACM SIGIR conf. on res. and development in information retrieval, 68-73, 1995 ; "A full-text retrieval system with a dynamic abstract generation function" Miike S., et al., Proc. of 17th ann. int. ACM SIGIR conf. on res. and development in information retrieval, 152-9, 1994 ; "New method in automatic abstracting" Edmunson H.P., J of ACM 16, 264-85, 1969). The speech information generating unit 23 permits word recognition, exemplified by sampling important keywords by Partial-Matching-Method and Incremental Reference Interval-Free continuation-DP and recognizing words and Incremental-Path-Method (see "Text summary generation system from spontaneous speech" Nakazawa M., et al., 1998 meeting of ASJ 1-6-1, 1-2, 1998).

The speech information generating unit 23 may also be responsive to the results of recognition to manage control to output the buzzer, oscitation, cough, monotonic sound or the like, along with the speech information, in place of erasing or outputting the speech in specified phonemes, vowels, consonants or accents. In this case, the speech information generating unit 23 processes the speech information by a technique disclosed in, for example, "Perceptual restoration of missing speech sounds" Warren R.M., Science 167, 392, 1970 ; "Speech perception and phonemic restoration" Warren R.M., Obusek C.J., Perception and psychophysics 9, 358, 1971.

It is also possible for the speech information generating unit 23 to manage control to transform the sound quality so that the speech is amplified by the results of recognition to give a hone-tone to output the resulting speech information. It is noted that the hone tone is such a sound tone outputted by a technique of reproducing the heavy low-pitch sound using tube resonance, in which the speech of a band not larger than approximately 2000Hz is amplified by a sound collecting tube, with the gain being approximately 15dB. It is possible for this speech information generating unit 23 to output the speech information after transforming the speech to a sound proximate to the sound outputted using an acoustic waveguide known from e.g., US Pat. No.4628528, or to output the sound from the speaker through the tube based on the acoustic wave-guide technique (example: wave radio (BOSE)). It is possible for the speech information generating unit 23 to output the speech information after passing the speech through a filter which passes only the low pitch sound. For example, SUVAG (Systeme Universel Verbo-tonal d'Audition-Guberina) may be used to perform filtering to pass only the speech of a pre-set frequency band to output the resulting speech information.

If music is verified to be fed to the microphone 21, it is possible for the speech information generating unit 23 to perform processing for displaying the color, or to transform the speech information, implemented by Song-Ryota or Voice-to-score-R (XG-works3.0 (YAMAHA)) to display the notes on the display unit 26. It is moreover possible for the speech information generating unit 23 to transform the speech information so that the speech rhythm transformed to help understand the speech rhythm as flickering signals for demonstration on the display unit 26 to display the color by color display or by spectrogram-pattern.

If the speech information generating unit 23 has verified that the emitted sound, such as the alarm sound, has been fed to the microphone 21, it is possible for the speech information generating unit 23 to transform the sound into the speech signal to display on the display unit 26 that the alarm etc. has been detected by the microphone 21, or to output the contents which will communicate the alarm contents to the speech enhancement unit 25.

If the speech information generating unit 23 has heard an alarm bell or a siren informing of oncoming tsunami, it not only demonstrates that effect but outputs from the speech enhancement unit 25 such announcement as "it's fire", "ambulance car has arrived" or "tsunami is oncoming" with a large volume, while demonstrating an image representing the fire, ambulance car or tsunami on the display unit 26.

This enables the hearing-impaired persons to be informed of an emergency by both the speech and the image to evade the worst casualty that might lead to mortality.

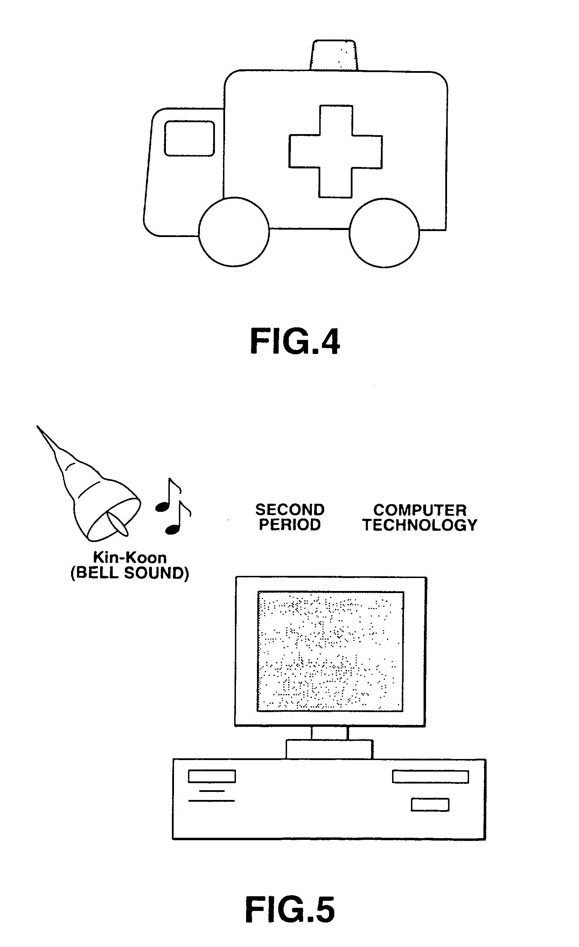

More specifically, the speech information generating unit 23 demonstrates "pii-poo-pii-poo (siren of an ambulance car)" as the result of recognition by the signal processor 22. In addition, the speech information generating unit 23 demonstrates "ambulance car" as the results of working and transformation from the results of recognition, while reading out and demonstrating a pattern of an ambulance car running as it-issues a signal indicating emergency or a running moving picture, among variable patterns of the ambulance cars stored in the storage unit 24. As another example, if an alarm against the tsunami is fed to the microphone 21, the speech information generating unit 23 demonstrates "wi-ii-n for tsunami" as the results of recognition at the signal processor 22, while demonstrating by "tsunami" as the result of working and transformation of the results of recognition. Moreover, as a further result of working and transformation, a pattern of the tsunami swallowing up a house on the coast, or the tsunami approaching to and ultimately swallowing up the house on the coast, by way of indicating the emergency, is read out from the storage unit 24 and demonstrated. For reducing the storage capacity of the storage unit 24, it is possible for the speech information generating unit 23 to demonstrate a simplified pattern on the display unit 26, as shown in Fig.4.

Thus, the speech information generating unit 23 demonstrates an image specifying emergency, by the inputting of the speech indicating the emergency, instead of a simple image by speech by inputting of the ambulance car or the tsunami.

As a further example, the speech information generating unit 23 may be responsive to the inputting to the microphone 21 or to the chime bell sound announcing the second period of school teaching schedule, such as teaching schedule of the computer technology, to display "kin-koon", while demonstrating the image of a "bell" as the result of working and transformation of the results of recognition. In addition, the speech information generating unit 23 demonstrates "second period: computer technology" in association with the timepiece function and with the previously inputted schedule program, while demonstrating an image representing the teaching schedule for the computer technology (personal computer).

Thus, with the HA 1 having the speech information generating unit 23, described above, the results of recognition and the results of working and transformation by speech are indicated on the display unit 26, while other information may be furnished to the user using the speech and the pre-set information.

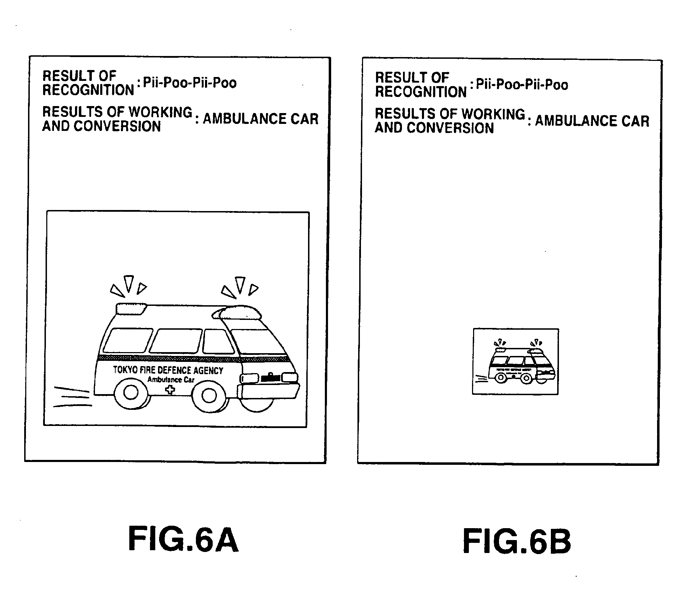

It is also possible for the speech information generating unit 23 to work on and transform the results of recognition using other parameters of the results of recognition as well as the meaning and contents of the results of recognition at the signal processor 22. It is moreover possible for the speech information generating unit 23 to perform different working and transformation, depending on the sound volume of the speech detected by the microphone 21 and the frequency response of the sound to read out different images from the storage unit 24 to present different results of working and transformation on the display unit 26. In this manner, the HA 1 is able to present more detailed results of speech recognition to improve the speech recognition by the user. Moreover, the speech information generating unit 23 is responsive to the sound volume of the siren of the ambulance car inputted to the microphone 21. For example, if the speech information generating unit 23 has verified that the sound volume of the siren is not less than the pre-set value, it displays the pattern of the ambulance car to a size shown in Fig.6A, whereas, if the speech information generating unit 23 has verified that the sound volume of the siren is not larger than the pre-set value, it displays the pattern of the ambulance car to a size smaller than the pattern shown in Fig.6A. So, it is possible with the HA 1 to increase the size of the pattern as the ambulance car approaches to the user so that the sound volume of the siren is increased to improve the user's recognition of the sound from outside.

The information contained in the speech, such as sound volume of the speech, or the non-language expressions, such as stressing expressions or expressions of feeling, by an image, such as dactylology, as may be seen from the following examples: The speech is processed with speech recognition processing to convert it into the word information, and the speech feature quantities, such as pitch information, are detected. The sites and types of the non-language information are then detected from the word information and the speech feature quantities by performing the non-language information extraction processing. The above information is sent to the information transformation processing. The word information is transformed by the Japanese-dactylology heading transformation processing into dactylology heading, whereas, in the non-language information transformation processing, the non-language information expression rule in dactylology is retrieved depending on the site of expression and type of the non-language information. Finally, the dactylologic animation is generated using the dactylologic heading transformation derived from the dactylologic animation generating processing and the dactylologic non-language information (see "Analysis of speech prominence characteristics for translating speed dialogue sign language" Ando H., et al., 1999 meeting of ASJ society of Japan, 377-8, 1999).

Thus, the speech information generating unit 23 is able to work on and transform not only the speech, using the speech detected by the microphone 21, but also the speech information, using other functions, for presentation in variable fonnats to the user.

The speech information generating unit 23 may also be provided with the function of memorizing the transformation and synthesis processing performed in the past. This enables the speech information generating unit 23 to perform automatic learning processing for automatically improving the transformation and synthesis processing executed in the past to improve the processing efficiently in the transformation and synthesis processing.

It is moreover possible for the signal processor 22 and the speech information generating unit 23 to perform speech recognition only for a specified noise, in addition to generating the result of recognition only of the speech of the speaker to generate the speech information for presentation to the speech enhancement unit 25 and the display unit 26 and thence to the user. In sum, the signal processor 22 and the speech information generating unit 23 performs speech recognition processing on the input sound to transform the result of recognition depending on the bodily state, the using state or the using objectives of the user, to generate the speech information in expressions readily comprehensible for the user to output the generated speech information.

In the foregoing explanation of the HA 1 according to the present invention, the speech information is generated by combining the speech data previously sampled and stored in the storage unit 24 in the speech information generating unit 23, and the so-generated speech information is outputted. Alternatively, the speech information generating unit 23 may also be provided with a speech data conversion unit for converting the speech data stored in generating the speech information by combining the speech data stored in the storage unit 24. The HA 1, provided with such speech data conversion unit, may be configured for changing the sound quality of the speech outputted by the speech enhancement unit 25.

In the foregoing explanation of the HA 1 according to the present invention, the speech obtained on previously sampling the speech of the user prior to laryngectomy is stored in the storage unit 24. Alternatively, plural speech data, instead of sole speech data, may be previously sampled and stored in the storage unit 24. That is, the speech data obtained on previously sampling the speech prior to laryngectomy, and the speech data proximate to the speech prior to laryngectomy, may be stored in the storage unit 24. Alternatively, the speech data likely to generate speech data prior to laryngectomy may also be stored. When the plural speech data are stored in the storage unit 24, it is possible for the speech information generating unit 23 to correlate the respective speech data by e.g., an equation to selectively use the speech data to generate the speech information.

Moreover, in the foregoing explanation of the HA 1 according to the present invention, the speech data sampled and stored in the storage unit 24 are synthesized to generate and output the speech information. It is, however, possible to process the speech information, obtained on synthesis of the speech data stored in the storage unit 24, with vocoder processing, such as voice conversion with STRAIGHT, for conversion to the speech of the sound quality different from the speech represented by the sampled and stored speech data.

It is also possible for the signal processor 22 to perform speaker recognition processing on the input speech to generate the result of recognition in keeping with each speaker. It is moreover possible for this signal processor 22 to output the information concerning each speaker with the result of recognition to the speech enhancement unit 25 or to the display unit 26 for presentation to the user.

For speaker recognition in the HA 1, vector quantization may be used (see "On the use of instantaneous and transition spectral information in speaker recognition" Soong F.K., Rosenberg A.E., Proc. of ICASSP 86, 877-80, 1986). In the speaker recognition, employing the vector quantization, parameters representing the features of the spectrum are extracted from the speech data for learning for registered speakers as preparatory processing and are clustered to formulate a codebook. In the method employing the vector quantization, it is predicated that the features of the speaker are reflected in the prepared codebook. For recognition, vector quantization is executed using the codebook for the totality of the registered speakers and the input speech to compute the quantization distortion (spectral errors) for the input speech in its entirety.

In speaker recognition in the HA 1, the method by HMM may be used (see "Text-dependent speaker identification using circular hidden Markov models" Zheng Y.C., Yuan B.Z., Proc. of ICASSP 88, 580-2, 1988). In this method, HMM is prepared from the speech data for learning for the registered speaker as a preparatory stage learning. In the method employing the HMM, it is predicated that the features of the speaker are reflected in the probability of transitions between the states and in the symbol outputting probability. In the speaker recognition stage, the likelihood by HMM of the totality of registered speakers is calculated using the input speech to give decision. The HMM structure may be ergodic HMM for left-to-right models.

Moreover, the speech inputted over the microphone 21 may be interpreted and outputted if, in the HA 1, the speaker recognition processing (ATRSPREC), speech synthesis processing (CHATR) and language interpretation processing (TDMT), as used in the ATR-MATRIX system (manufactured by ATR ITL) is used (see "ATR-MATRIX: A spontaneous speech translation system between English and Japanese" Takezawa T., et al., ATR J2. 29-33, June 1999).

In the speech recognition processing (ATRSPREC), real-time many-word continuous speech recognition is performed and the speech recognition tool is used to process the step from the construction of an acoustic model necessary for speech recognition and the language model up to signal processing and retrieval. In this speech recognition processing, the executed processing is completed as a tool, while the tool can be combined together easily, while compatibility with the HTK is assured. For speech recognition, it is possible to effect speech recognition of indefinite speakers.

The speech recognition processing (ATRSPREC) offers a set of tools, as shown in (a-d) below, as the basic flow of the speech recognition processing. Meanwhile, the speech recognition processing (ATRSPREC) operates in a UNIX environment (OSF-1, HP-UX).
(a) Signal processing: the waveform signal of the speech uttered by a human being is transformed into a characteristic quantity which has extracted the information necessary for speech recognition processing termed a characteristic vector.
(b) Acoustic model structure: the relation of the contents of phonation of the characteristic vector is modelled in the form of parameter estimation. The model may be adapted to the speaker (preparation of HMnet adapted to a particular speaker using a small amount of speech samples and HMnet of a standard speaker (ML/MAP estimation method, VES, MAP-VFS)).
(c) language model structure: the language information, such as words or grammatical constraint is modelled.
(d) retrieval: the contents of phonation are estimated using an acoustic model or a language model.

The language translation processing (TDMT: concordant fusion translation system) concordantly drives the instance translation and dependent sentence structure analysis to execute translation processing stepwise from phrase to clause and from clause to sentence.

In the language translation processing (TDMT), language translation is executed using diversified expressions such as colloquial expressions proper to dialogue and using the processing of judging the sentence structure and instances for dialogue. In this language translation, even if there is any portion that cannot be captured by a microphone, the portions that can be translated is translated at any rate, by way of partial translation. If the entire sentence cannot be translated accurately, the contents which the speaker is desirous to convey are to be conveyed to a fairly satisfactory extent to the partner.

In speech synthesis processing (CHATR), those units most proper to a sentence desired to be outputted are selected from a large number of speech units stored previously in a database and are connected to one another to synthesize the speech. This enables the smooth speech to be outputted. With this speech synthesis, the speech data closest to the speaker's voice is used to make synthesis with the voice similar to the speaker's voice. For this speech synthesis, it is possible for the speech information generating unit 23 to discriminate the sex of the speaker from the input speech to effect speech synthesis with the voice adapted thereto.

In the speech synthesis processing (CHATR), prosody parameters of the sequence of phonemes desired to be synthesized are estimated from phoneme to phoneme based on the prosody knowledge basis. The speech unit having the optimum prosody information is selected, based on the calculated prosody parameters, to find indices to the file of the speech waveform information. The selected speech unit is sliced one-by-one from within the speech waveform file and connected. The generated speech wavefonn is outputted.

When doing speech recognition processing, language translation processing and speech synthesis processing, connection is made to the communication equipment, such as portable telephone set, via the communication circuit 27, to enable bi-directional dialogue.

In the HA 1, doing the speech recognition processing, language translation processing and the speech synthesis processing, there is no necessity of giving instructions to the system for utilizing the speech translation system, near-real-time recognition, translation, synthesis or beginning the talk, in Japanese and English, such that fully duplex dialogue and high quality recognition, translation and synthesis to phonation become possible. For example, if phrases such as "I say" or "well, ..." or more or less colloquial expressions are inputted to the microphone 21, the speech recognition processing, language translation processing and the speech synthesis processing are still possible.

In the speech recognition processing (ATRSPREC),the speech information generating unit 23 not only judges the sentence structure based on the result of recognition from the signal processor 22, but also uses dialogue examples to generate the speech information suited to the diversified expressions such as colloquial expressions proper to the dialogue. If there is any portion of the dialogue that cannot be captured by the microphone 21, the speech information generating unit 23 generates the speech information as much as possible if the speech information can be generated at any rate. In this manner, the speech information generating unit 23 transmits the contents desired to be transmitted by the speaker to a fairly satisfactory extent to the partner even if the speech information of a given sentence cannot be generated accurately. It is also possible for the speech information generating unit 23 to generate the speech information by translation processing (partial translation function).

In the speech synthesis processing (CHATR), the speech information generating unit 23 selects those units most proper to a sentence desired to be outputted from a large number of speech units stored previously in a database and connects the selected units to one another to generate the speech information. This enables the speech information generating unit 23 to output the smooth speech. It is possible for the speech information generating unit 23 to effect synthesis processing with the voice closest to the speaker's voice, by employing the speech data closest to the speaker's voice, to judge the sex of the speaker from the input speech to effect the speech synthesis with the matched voice to generate the speech information.

It is also possible for the speech information generating unit 23 to extract only the sound of the specified sound source to output the extracted sound to the speech enhancement unit 25 and/or to the display unit 26. Thus, it is possible for the HA 1 to artificially produce a cocktail party phenomenon, that is to extract only the sound of the particular sound source from a mixture of sounds from plural sound sources for hearing.

It is moreover possible for the speech information generating unit 23 to correct the hearing error to generate the speech information using a technique of correcting the error-corrupted result of recognition using examples containing analogous prosody (see "A computer recovering its own misheard -Guessing the original sentence from a recognized result based on familiar expressions-" Ishikawa K., Sumida E., ATR J37, 10-11, 1999). At this time, the speech information generating unit 23 executes the processing in meeting with the bodily state, the using state or the using objectives of the user, to effect working and transformation in a manner readily intelligible to the user.

In the foregoing explanation of the HA 1 according to the present invention, the speech detected by the microphone 21 is subjected to speech recognition processing and to speech generating processing. It is however possible to provide an actuating input unit 28 acted on by the user etc. and to transform the data inputted to the actuating input unit 28 by the signal processor 22 into speech and/or an image. This actuating input unit 28 may also be worn on the user's finger, for example, so that the finger movement is detected to generate data which is outputted to the signal processor 22.

The HA 1 may also be provided with a mechanism for generating letters and/or image data in which the user touches a liquid crystal surface etc. with a pen to draw letters and/or an image to generate letters and/or image data based on an image obtained on capturing the trajectory. The HA 1 processes the generated letters and/or image data with recognition or transformation by the signal processor 22 and the speech information generating unit 23 to output the so-processed letters and/or image data.

The HA 1 is not limited to an embodiment in which the speech recognition processing is executed by the signal processor 22 using the speech from the microphone 21. For example, the speech recognition processing may also be executed using signals from a nasal sound sensor, respiratory air-stream sensor, neck-vibration sensor, bone vibrator, such as mouthpiece-type vibrator, worn by the user or by a person other than the user, or using signals from the microphone 21. Thus, with the HA 1, the rate of recognition by the signal processor 22 may be improved further by employing respective sensors in addition to the microphone 21.

The HA 1 may also be provided with a camera mechanism 29 for photographing a moving picture or a still image by a digital camera carrying e.g., an automatic focussing mechanism or a zooming function, as shown in Fig.2. This camera mechanism 29 may be loaded as one with the display unit 7 of Fig. 1. The camera mechanism 29 may use a digital camera.

The camera mechanism 29 provided on the HA 1 may also be provided with a spectacular function for displaying the photographed image on the display unit 26 after image transforming processing of enlarging or distorting it depending on the bodily state, such as the state of the user's eye, e.g., the sight or the astigmatism, the using state or the using objectives of the user.

The HA 1 demonstrates a photographed image on the display unit 26 from the camera mechanism 29 through a signal processing circuit. With the HA 1, the image which has photographed the speaker by the camera mechanism 29 is presented to the user to improve the user's recognition. It is possible with this HA 1 to output the photographed image through the communication circuit 27 to an external network. It is also possible with the HA 1 to demonstrate the image photographed by the camera mechanism 29 from the external network by inputting the image through the communication circuit 27 and the signal processing circuit etc.

It is also possible with the HA 1 to effect the face recognition processing or the object recognition processing, using the photographed image of the speaker, for representation on the display unit 26. In this manner, it is possible with the HA 1 to present to the user the mouth, face expressions or the entire atmosphere of the person to be imaged to improve the speech recognition by the user.

In the face recognition, employing the imaging function, the following methods may be used to extract face features to effect identification of each person. It is noted that these methods are merely illustrative and are not construed to be limitative.

As one of the feature expression methods for identification by matching of the monochromatic image, there is a method of mosaicking a pattern and using an average pixel concentration of each block as a representative value of the block to represent the monochromatic image as low order vector subject to information compression. This method is termed a M-feature. There is also a method, known as a Kl-feature, by feature representation of a monochromatic image, according to which an orthogonal fundamental image obtained on adapting Karhunen-Loeve (KL)-expansion to the sample set of the face image is termed an intrinsic face and an optional face image is described by feature vector of lower order constructed from coefficients expanded using this intrinsic face. There is also a method which effects discrimination by KF-features which are low-order characteristic vector obtained on low-order dimension compression by transforming a collation pattern of KI-features derived from the dimension compression by KL- expansion of the face image set into Fourier spectral components and by KL-expansion of sample sets as in the case of the KI-features. The above-described methods may be used for recognizing face images. If the face is recognized using these methods, the private identification information as to who is the partner of the dialogue is imparted to the computer to give the user the information as to the partner of the dialogue to increase the recognition of the speech information. The above-described processing is described in, for example, "Human face feature extraction and identification by neural network" Kosugi M., Special interest group notes of IPSJ CVIM, 73-2, 1991-07 ; "Face recognition using eigenface" Turk M.A., Pentland A.P., Proc. CVPR, 589-91, 1991-06 ; "Robust face identification by pattern matching based on KL expansion of the Fourier spectrum" Akamatsu S., et al., IEICE trans. vol.J76DII No.7, 1363-73, 1993 ; "Learning to identify and track faces in image sequences" Edwards G.J., et al., Proc. of FG 98.260-5, 1998.

When doing objet recognition, the HA 1 mosaicks a pattern representing an object, and discriminates an object by matching to an actually photographed image. In this HA 1, the motion vector of a matched object is detected to track the object. This enhances the recognition of the speech information generated from the speech emitted from the object. For this object recognition processing, a technique used in Ubiquitous Talker (manufactured by SONY CSL) may be used (see "Ubiquitous Talker: Spoken language interaction with real world objects" Nagao K., Rekimoto J., Proc. 14th IJCAI 95, 1284-90, 1995)

It is also possible with this HA 1 to photograph a still image by pressing a shutter as in a digital camera fort a still image. It is also possible or the camera mechanism 29 to generate a moving picture to output the so-generated moving picture to the signal processor 22. As a signal system for photographing a moving picture by this camera mechanism 29, an MPEG (Moving Pictures Experts Group) system may be used. The camera mechanism 29 provided in the HA I is able to photograph a 3D-image to photograph the speaker or the speaker's lip to demonstrate it on the display unit 26 to improve the user's recognition further.

With the HA 1, the speech uttered by the user and/or the image which has photographed the scene may be recorded and/or reproduced to enable post-learning in language learning to promote the language learning.

Moreover, with this HA 1, if an image is enlarged and demonstrated on the display unit 26 to recognize the partner, the atmosphere in which the dialogue is had may be grasped to improve the accuracy in speech hearing. In addition, the lip-reading may be used to improve the recognition.

The HA 1 may also be provided with e.g., a switch mechanism so that the user is free to control whether the speech detected by the microphone 21 is outputted to the speaker 25, an image photographed by the camera mechanism 29 is to be outputted to the display unit 26 or both the speech and the image are to be outputted. At this time, the switch mechanism, acted on by the user, controls the output from the speech information generating unit 23.

By way of an example, it is possible for the switch mechanism to switch to permit the speech detected by the microphone 21 to be outputted by the speech enhancement unit 25 on detection of the voice "speech", to permit an image photographed by the camera mechanism 29 to be outputted by the display unit 26 on detection of the voice "image" or to permit both the speech and the image to be outputted on detection of the voice "speech and image". There may also be provided a switch control mechanism employing the above-described speech recognition. The system may be configured as a switch control system employing gesture recognition by employing a gesture-interface.

This switch mechanism may be provided with a function of switching the parameters of the camera mechanism 29, such as zooming state, to switch the state of photographing an image by the camera mechanism 29.

Variable examples of the mechanisms for outputting the speech information prepared by the speech information generating unit 23 in the HA 1 are hereinafter explained. Of course, the present invention is not limited to the outputting mechanism as now explained.

That is, the mechanism in the present HA 1 of outputting the speech information may be of the type employing bone-conduction or stimuli to the skin, without being limited to the speech enhancement unit 25 or to the display unit 26. The mechanism for outputting the speech information may, for example, be comprised of a vibrating small-sized magnet loaded on an eardrum.

Such HA 1 may be provided with a pressure lever plate, as an oscillation plate of a bone-conduction vibrator system of a bone-conduction HA, applying vibrations to the user's bone (temporal bone) and which is adapted for outputting a signal obtained on transformation by the speech information generating unit 23 (see "The adjustment and effectiveness of bone-conduction type hearing aid" Sugiuchi T., JOHNS Vol.11, No.9, 1304, 1995), or may utilize the compensation technique by the tactile sense, such as a tactile aid employing the stimulus to the skin. By employing the technique by the bone-vibration and stimulus to the skin, it is possible to transmit signals from the speech information generating unit 23 to the user. The HA 1, exploiting stimulus to the skin, is provided with a vibrating array for a tactile aid, fed with the speech information from the speech information generating unit 23, so that it is possible to output the speech issued by the speech enhancement unit 25 through the tactile aid and the vibrator array.

In the foregoing explanation of the HA 1, an exemplary processing of outputting the speech information as the speech is explained. However, this is merely illustrative. For example, the HA 1 may be of the type in which the result of recognition is presented to the user by the middle ear implant.

Moreover, the HA 1 may be provided with a cochlear implant so that the result of recognition will be presented to the user by the cochlear implant. That is, with the present HA 1, it is possible to send the speech information as electrical signals to a cochlear implant system made up e.g., of an embedded electrode or a speech processor for presentation to the user.

Also, the present HA 1 may be provided with an ABI system which contacts the electrode with the cochlear nuclei (the junction of the cochlear nerves in myelen cephalon) to send the result of recognition through the electrode to the user to present the speech information to the user by the ABI system. That is, it is possible or the HA 1 to send the speech information as electrical signals to the ABI system comprised of the embedded electrode and the speech processor etc. for presentation to the user.

It is also possible for this HA 1 to modulate, work on or transform the result of recognition into the speech in the ultrasonic range, as speech information, to output the resulting information. The result of recognition may be or may not be worked on or transformed, depending on the bodily state, the using state or the using objectives of the user, for example, depending on whether or not the hearing-impaired user is able to recognize the speech in the ultrasonic range. The HA 1 may also be provided with a bone conduction ultrasound system to generate signals in the ultrasonic frequency range to output the generated signal to the user through e.g., an ultrasonic vibrator (see "Activation of the auditory cortex by ultrasound" Hosoi H., et al., Lancet Feb 14351 (9101), 496-7, 1998).

The HA 1 may also use a bone-conduction unit employing bone-conduction through tragus and air-conduction through internal wall of auditory canal to present the speech information to the user. An example of this unit is the headphone system for the hearing-impaired people -Live phone- manufactured by NTT.

In the foregoing explanation, an embodiment of the HA 1 provided with plural output means, such as the speech enhancement unit 25 or the display unit 26, has been explained. However, these output means may be used in combination, or the respective output means may be used independently of one another. It is also possible for the HA 1 to output the speech using the function of the conventional HA 1 in which the voltage level of the speech inputted to the microphone 21 is varied and to present the result of recognition by the above-mentioned other output means.

The HA 1 may also be provided with a switch mechanism for managing control in the speech information generating unit 23 so that the output results from the speech enhancement unit 25 and/or the display unit 26 will be issued simultaneously or with a time difference. The HA 1 may be provided with a switch mechanism for managing control whether the output result is to be outputted plural times or only once.

The HA 1 has been explained in the foregoing with reference to Fig.2. However, the HA 1 may also be provided with a CPU for performing the first operation of working on or transforming the input speech on the input speech signal as described above for demonstration on the display unit 26, a CPU for performing the second operation of working on or transforming the input speech on the input speech signal as described above for outputting the results to the speech enhancement unit 25 and a CPU for performing the third operation of displaying an image picked up by the camera mechanism 29.

It is possible for the HA 1 to actuate the CPUs performing the above-described first and second operations independently of one another to execute the first or second operations, to actuate the CPUs performing the above-described first to third operations independently of one another to execute the first to third operations or to actuate the CPUs performing the first and second operations, the first and third operations or the second and third operations simultaneously.

Moreover, in the HA 1, it is possible for the speech information generating unit 23 to manage control to output the results from the above-described respective output means simultaneously or with time difference, depending on the bodily state, the using state or the using objectives of the user.

The HA 1 may also be provided with plural CPUs, one of which performs at least one of the first to third operations executed by the above-mentioned plural CPUs and the others of which performs the remaining operations.

In this HA 1, it is possible for a sole CPU to work on or transform the input speech as letter data to output the resulting letter data to the display unit 26, by way of performing a text-to-speech synthesis, while it is possible for a sole CPU to work on or transform the input speech as letter data, for another CPU to perform STRAIGHT processing on the same input speech to output the resulting signals to the speech enhancement unit 25 and for the remaining CPU to perform e.g., STRAIGHT processing among the vocoder processing operations to output the resulting signals to the speech enhancement unit 25. That is, the HA 1 may be configured for performing different operations by the different CPUs depending on whether the signal is to be outputted to the speech enhancement unit 25 or display unit 26.

It is also possible for the HA 1 to have the CPUs for performing the above-described various working and transformation operations to output the resulting signals to the various output means and to output the speech inputted to the microphone 21 without doing the working and transformation operations.

It is also possible for the present HA 1 to be separately provided with the CPUs doing the above-described various working and transformation operations and a CPU performing other working and transformation operations.

The HA 1 may be configured for transforming the result of recognition worked on or transformed or not worked on nor transformed or the photographed image in the speech information generating unit 23, and for amplifying the electrical signals obtained on detecting the speech and doing sound quality adjustment, gain adjustment or compression adjustment for outputting to the speech enhancement unit 25 as in the case of the conventional HA.

It is also possible for the HA 1 to perform the processing executed by the signal processor 22 and the speech information generating unit 23 by the processing consisting in the combination of the Fourier transform or vocoder processing, such as STRAIGHT.

The above-described HA 1 according to the present invention, is a small-sized personal HA. The present invention may, however, be applied to a large-sized device used by a group of users, such as a HA for training on a table or group training.

The presentation means to the visual sense may be enumerated by HMD, head-coupled display or an artificial eye (visual prosthesis). Examples may be given by:
(a) Binocular HMD (presenting parallax images for right-and-left eyes to enable stereoscopic vision, or presenting the same image to the right-and-left eyes to give an apparent large-sized image);
(b) Monocular HMD;
(c) See-through HMD, Eye-through HMD (puppet-eyes (ATR) which mainly realizes augmented reality (AR);
(d) Display fitted with a function of assisting or enhancing the vision
(e) Eyeglass-type binocular telescope employing auto-focussing and visual filter;
(f) System employing contact lens in the eye-piece part;
(g) Retinal projection type (Virtual retinal display, Retinal projection display, Intermediary-type display);
(h) Artificial eye (visual prosthesis) The ambience scene is captured by a camera worn by the user and processing, such as by feature extraction, is performed to prepare image data. The image data and the power for driving a MENS (micro-electrical mechanical system, a micro-machine provided with an electronic circuit) embedded in a body are transmitted by a cable or over a radio route. The MENS creates electrical pulse signals, analogous to the neural signals, based on the transmitted data, to transmit the signals through a stimulating electrode to the cranial nervous system. The artificial eye is classified into h1-h4 depending on the site of embedding the MENS:
   [h1] cortical implant (see "Artificial vision for the blind by connecting a television camera to the visual cortex" Dobelle Wm.H., ASAIO J2000 46, 3-9, 2000); [h2] sub/epi-retinal implant (see "Development of an epiretinal electronic visual prosthesis" Rizzo J.F., et al., Harvard-Med. MIT Res. Program, In retinal degenerative diseases and experimental theory. Kluwer Academic Plenum Publishers, 463-70 1999); [h3] optic nerve implant (see "Micro-systems based visual prosthesis" MIVIP (Catholique Univ. Sci. Appliquees Microelectronics Labo.)); and [h4] hybrid retinal implant (cell culture plus retinal implant system ( Nagoya Univ.)). Other examples may be given by:
(i) HMD with a line of sight inputting function (HAQ200, manufactured by Shimazu);
(j) Displays mounted on other than the head, such as on the ear, whole body, neck, shoulder, face, arm, hand or eye-glasses;
(k) Stereo display (projection type object-oriented display (head-mounted projector, as disclosed in "Head-mounted projector (II) Implementation" Iinami M., et al., Proc. 4th Ann. Conf. of VRSJ, 59-62, 1999), link-typed stereo display);
(l) Spatial immersive display, such as Omnimax, CAVE (see "Surround-screen projection-based virtual reality: The Design and implementation of the CAVE" Cruz-Neira C., et al., Proc. of SIGGRAPH 93, 135-142, 1993), CAVE-typed stereo image device (CABIN, see Hirose M., et al., IEICE trans. Vol. J81DII No.5, 888-96, 1998), Small-sized ultra-wide field of view display (projection display, such as CAVE and HMD, see "Ultra-wide field of view compact display" Endo T., et al., Proc. 4th Ann. Conf. of VRSJ, 55-98, 1999), Arch-screen; and
(m) other display system such as Upton eyeglass, display fitted with a function of sun-glasses.

In particular, the spatial immersive display may be used if the HA is used as a large-sized HA. It is noted that a 3D-acoustic system uses a spatial fixed sound source employing a head-related transfer function exemplified by Convolvotron&Acoustertron-II (Crystal River Engineering); a HA employing a dynamic type driver unit and am electret microphone (TH-H50, manufactured by SONY). For creating a sound field close to real sound field or employing a trans-aural system, a large-sized HA system is desirable. The trans-aural system having the tracking function corresponds to the CAVE in 3D-image reproduction.

The HMD 2 may be provided with a 3D-position detection sensor at the scalp. With the HA 1, provided with the HMD 2, it is possible to vary the demonstration on the display in keeping with the user's head movement.

The HA 1, employing the AR, is fitted with a sensor for sensing the user's movement. The AR is produced by employing the information as detected by the sensor and the speech information as detected by the microphone 21 and generated by the speech information generating unit 23. The speech information generating unit 23 uses a system integrating various sensor systems and a VR forming system and a VR-system comprised of the display system in concert to overlay the VR on the real space to create the AR stressing the reality feeling. In this manner, when the visual sense display is used in the HA 1, the information from the image directly before the face is spontaneously accepted as if the image information is present there, with the image not simply being present before the eyes, without the line of sight being deviated significantly each time the information is supplied, thus enabling the information from the visual sense to be accepted in a spontaneous state. The system, described below, is able to carry out the above processing.

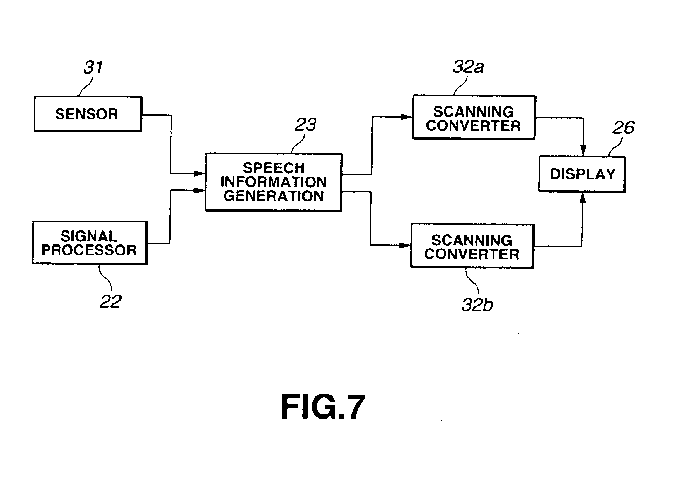

Referring to Fig.7, the HA 1 includes a 3D-graphic accelerator for creating the virtual environment generation, in the inside of the speech information generating unit 23, to provide for stereoscopic vision of the CG (computer graphic). The HA 1 also is provided with a radio communication system. For providing the HA 1 with the information as to the user's position and attitude, a small-sized gyro-sensor (GU3011 Data-tech) and the acceleration-sensor are mounted on the user's head and waist, respectively. The information from the sensor 31 is processed by the speech information generating unit 23 and processed by scan converters 32a, 32b corresponding to the user's right-and-left eyes to direct the image to the display unit 26 (see "Manual-less operation with wearable augmented reality system" Ban Y., et al., Proc. 3rd Ann. Conf. of VRSJ, 313-4,1998).

The AR may also be realized by the following methods; searching for a marker form a video stream form a camera, finding a 3D-position and orientation of the marker, identifying the marker, determining the position and the object orientation, rendering 3D-objects in video frame, and outputting the video stream to the HMD (Integrating real and virtual worlds in shared space (ATR MIC Labs and HIT Lab. Univ. of Washington)).

In the present HA 1, the AR can be reinforced by employing, in addition to the sensor 31, a status recognition system (example: Ubiquitous Talker (Sony CSL)), the following various sensor systems which are other systems forming a VR-system, a display system and this HA 1, in concerted fashion, such that the speech information can be complemented using multi-modality.

For forming the spaces, such as VR or AR, the user sends to the sensor 31 in person the information which then is forwarded to the system integrating the VR forming systems to forward the information from the display system to the user.

There are following devices in the sensor 31 (information inputting system).

The following devices may be used as the devices which capture the movements of the human body or act on the space: an optical 3D-sensor for measuring the position (ExpertVision HIRES and Face Tracker (Motion Analysis)), a magnetic 3D-sensor for measuring the position (InsideTrack (Polhemus), a 3SPACE system (Polhemus), Bird (Ascension Tech)), a mechanical 3D-Digitizer (MicroScribe 3D Extra (Imnersion)), a magnetic 3D-Digitizer (Mode1350 (Polhemus)), a sonic 3D-Digitizer (Sonic Digitizer (Science Accessories)), an optical 3D-scanner (3D Laser Scanner (ASTEX)), a sensor of living body (measurement of electricity in the body), cyber-finger (NTT human interface labo), globe-type device (DetaGlove (VPL Res), Super Glove (Nissho Electronics) Cyber Glove (Virtual Tech)), Force-feedback (Haptic Master (Nissho Electronics), PHANToM (SensAble Devices), 3D- mouse (Space Controller (Logitech)), a line of sight sensor (eye-movement analyzing machine (manufactured by ATR audio-visual sense mechanism res labo), a system which measures the motion of the whole body (Data Suit (VPL Res)), a motion capture system (HiRES (Motion Analysis)), a sensor for measuring acceleration (3D-semiconductor acceleration sensor (manufactured by NEC), a HMD with a function of inputting the line of sight, and a positioning system (example: GPS).

For realizing VR and AR, not only the display unit 26, but also a haptic display, employing the haptic sense, a tactile display, a force display, or an olfactory display, may be used. The speech recognition can be improved by adding not only the acoustic sense but also the haptic sense by transmitting the speech by haptic sense by a haptic display. As this haptic display, a vibration array (an optacon, a haptic mouse or a tactile vocoder), or a tactual perception pin array (a paper-less braille), may be used. There are also a water-jet, an air-jet, PHANToM (Sens-Able Devices), Haptic master (Nissho Electronics). Specifically, the HA 1 displays the VR-keyboard by a VR-space and controls the processing by the signal processor 22 and the speech information generating unit 23 by a VR-keyboard or a VR-switch. Thus, it is no longer necessary to provide a keyboard or stretch the hand to the switch to ease the operation of the user to realize a wearing feeling comparable to that with the HA that is simply worn on the ear.

As a vestibulo-equilibratory display, such a system which provides for diversified acceleration expression by wash out and back even in a device with a narrow operating range, such as a motion bed, may be used.

From the report on the error information the perception of a sound image by vestibular stimulus ("Interaction between the perception of a moving sound image and the sense of equilibrium" Ishida Y., et al., Tech. committee on psychological and physiological acoustics. ASJ H-95 (63), 1-8, 1995), it has been found that the vestibular stimulus influences the hearing. So, the vestibulo-equilibratory display is thought to compensate for the auditory sense.

As the olfactory display, the technique adopted in ("A study of olfactory display" Hirose M., et al., Proc. of 75th JSME Spring Ann. meeting, 433-4, 1998. 4) and in the olfactory sensor system (manufactured by Shimazu) can be used.

In this HA 1, such a system may be used which recognizes the sensor information other than the information on the speech or the image to represent it to an image, such as a prototype system of hand-language interpretation. In this HA, such a system (developed by HITACHI) may be used which recognizes the input information of hand-language from e.g., the Data Glove (VPL Res) by a hand-word recognition processing derived from the hand-language standard pattern to demonstrate the information processed by a sentence conversion unit based on the word dictionary documentation rule on a display.

The systems integrating the VR-systems may be enumerated by the following systems which are not limitative. For example, a system supplied as a C, C++ library, supports device input, interference computation or event management, with the application portion being programmed by the user using a library, or a system which is not in need of user programming, sets the database or event setting by an application tool, and executes the VR-simulation, may be used. The various systems pertinent to the HA 1 may be interlinked by communication. The broad-range communication path may be used for transmitting the status with high ambience. In the HA 1, the following techniques, used in the field of the 3D-CG, may be used. The concept is to present faithfully that can happen in reality, to create a non-realistic space and to present what is actually impossible as an image. This HA 1 performs modelling techniques for producing complex and precise models (wire-frame, surface, and solid modellings, Bezier, B-spline, and NURBS curves, Boolean calculations, free shape deformation, free shape modelling, particle, sweep, fillet, lofting, meta-balls etc.), rendering techniques for pursuing real objects having massy feeling and penumbra (shading, texture mapping, rendering algorithm, motion-blur, antialiasing or depth-cueing). The HA 1 uses a key-frame method, an inverse kinetics, morphing, shrink-wrap animation and alpha-channel, as an animation technique for moving the produced model and for simulating the real world. The 3D-CG, becomes possible by the above-described modelling, rendering, and animation techniques. The technique described as sound rendering in the undermentioned publications may be used (see "Computer Graphics" Takala T., Proc. SIGGRAPH-92 vol.26 No.2, 211- 20, 1992).

The systems for integrating the above-described VR-systems include the following:
VR-runtime software [dVS], VR-space constructing software [dVISE], Library for developing VR [VC Toolkit] (Division Inc.);
WorldToolKit, WorldUp (SENSE8);
VRT(Superscape)
RealMaster (Solidray);
Constructing VR without model (see "A study of image editing technique for synthetic sensation" Hirose M., et al., Proc. ICAT-94, 63-70, 1994).

The HA 1 may be connected to a printer device for presenting the result of speech recognition and the results of working and transformation on a printing sheet, in addition to demonstration on the display unit 26 for presentation of the result of speech recognition and the results of working and transformation, for further improving the speech recognition by the user.

In the present embodiment, explanation has been made of a portable HA 1 in which the HMD 2 and the computer unit 3 are interconnected over an optical fiber cable 4. Alternatively, the HMD 2 and the computer unit 3 may be interconnected over a radio path and the information may be transmitted/received over a radio path such as by frequency hopping of an electromagnetic wave of 2.4GHz range as discussed by Bluetooth, or by a signal transmission system employing infrared rays.

The present HA 1 may be split into plural devices according to functions performed by respective portions shown in Fig.2 to provide for radio interconnection between the respective portions, in addition to providing for a radio path interconnecting the HMD 2 and the computer unit 3. At least the computer unit 3 need not be worn on the user to provide for transmission/reception of the information with the HMD 2. The present HA 1 may also be divided into plural devices, by splitting according to the functions performed by the respective components shown in Fig.2, depending on the bodily state, the using state or the using objectives of the user, these devices being interconnected over a radio path. This reduces the weight and the volume of the device worn by the user to improve the bodily freedom of the user to improve recognition by the user.

In the HA 1, control of the processing by the signal processor 22 and the speech information generating unit 23, version upgrading (such as anti-virus software), fitting, cooperation with an operational center, such as actuating method or claim processing, may be executed by the communication circuit 27.

That is, the communication circuit 27, connected to the an external signal processing server, transmits the signal or the speech information, generated in the signal processor 22 or in the speech information generating unit 23, to a signal processing server, and is able to produce speech signals or the speech information obtained on pre-set signal processing in the signal processing server. In the HA 1, provided with the communication circuit 27, the recognition processing or the working and transformation operations to be performed by the speech information generating unit 23 are executed by the external signal processing server to diminish the internal processing contents. In this HA 1, the processing not carried out by the signal processor 22 or by the speech information generating unit 23 is executed by the external signal processing server, depending on the bodily state, the using state or the using objectives of the user, to improve the speech recognition by the user further.

Moreover, with the present HA 1, a wide variety of sorts of images can be demonstrated on the display unit 26, by downloading image data stored in the storage unit 24 for use in the signal processor 22 or speech information generating unit 23, from the external server, even if a large quantity of the images are not held in the storage unit 24. So, with the present HA 1, provided with the communication circuit 27, the processing desired by the user can be performed in the signal processor 22 and in the speech information generating unit 23 to improve the speech recognition by the user further.

Thus, by having the processing executed by the external server and by having data required for processing stored in the external server, the HA 1 can be reduced in size to improve wearing comfort and portability.

Moreover, in the present HA 1, in which a program representing the processing contents different from those set at the outset in the signal processor 22 or in the speech information generating unit 23 is downloaded from the external server, depending on the bodily state, the using state or the using objectives of the user, the processing desired by the user can be executed by the signal processor 22 and by the speech information generating unit 23 to improve the speech recognition by the user further.

If, in the HA 1, signals to be communicated to the communication circuit 27 are not detected, such that communication cannot be executed, the above-described processing may be performed by a method other than the processing employing the communication, whereas, if the communication is possible, the above-described processing may be automatically performed by a processing method employing the communication.

As the external network connected to the communication circuit 27, the datacenter or the ASP through the Internet may be used. And the external network may be used as the CSP (commerce service provider) or the VPN (virtual private network) in the case of using the ASP.

Moreover, if the speech information is to be transmitted/received between the HA 1 and the external network, the VoIP (Voice over IP) system of transmitting the speech over the internet, VoFR (Voice over FOR) system of transmitting the speech on a frame relay network or the VoATM (Voice over ATM) of transmitting the speech over the relay network is used.

The present HA 1 may be provided with an external input/output terminal to output speech data to the external device to have the processing executed by the external device instead of by the signal processor 22 or the speech information generating unit 23, or to download data necessary for processing in the signal processor 22 or speech information generating unit 23 from the external device.

In this HA 1, the processing not executed by the signal processor 22 or by the speech information generating unit 23 is executed by the external device, depending on the bodily state, the using state or the using objectives of the user, to improve the speech recognition by the user further.

In the present HA 1, data may be read out from the external device to have the data necessary for processing stored in the external device to enhance the sorts of the images showing the results of the working and transformation operations of the result of recognition to improve the speech recognition by the user further.

In the HA 1, in which the processing is executed by the external device and data necessary for processing is stored in the external device, the device can be reduced in size to improve the wearing comfort and the portability.

Moreover, in the present HA 1, in which the program indicating the processing contents different from those as set in advance in the signal processor 22 or in the speech information generating unit 23 is downloaded from the external device, depending on the bodily state, the using state or the using objectives of the user, the processing as desired by the user can be performed in the signal processor 22 and in the speech information generating unit 23, to improve the speech recognition by the user further.

In addition, the HA 1 according to the present invention, in which the synthesized speech can be displayed for presentation to the user, can be used in the following fields of application:

The HA 1 can be used as a support for works mainly of hearing-impaired persons and persons with speech disorders as a wearable computer, authentication, voice-speech training, conference, reception by telephone or internet, program making, such as animation program, real scenes, news or music program, work in the space, transportation (pilot of space ship and airplane), various simulation works, employing VR and AR, operation by remote control (micro-surgery, research (marketing), military works, design works, work at home, operations under hostile conditions, such as under noise, such as works in construction site or plants, sorting works etc.

This HA 1 is useful for supporting the hearing-impaired persons and persons with speech disorders mainly, in medical care, such as primary care, medical examination, examination (such as audiometry), nursing care, care at home, custody business, work at custody school, medical support work, industrial medical service (such as mental health), medical treatment (internal medicine/illness). The HA also is useful for brainstem deafness, deafness due to auditory cortex and sub-cortical lesion, and training or custody of people with speech disorders such as aphasia. The HA is also useful for learning foreign languages, amusement (TV games with communicative tools), private home theaters, watching concerts or games etc., mutual communication and exchange information among players and between players and coaches, car-navigation-systems, education, cooperation with information equipment, communication such as automatic telephone interpretation, electric commerce, ASP/CSP, online-shopping, electric money, electric wallet, transactions employing Debit card etc., settlement, instrument and banking businesses, such as exchange or derivatives, for communication for persons with voice-speech disorders, serious cases, persons with serious bodily disorders, amusement in amusement parks, fish tank VR-display or stereo-vision-system with naked eyes, VR, AR, Tele-existence of R-Cube employing tele-existence-visual-system, politics (participation in election etc.), sports training, such as race (car, yacht etc.), adventure (in mountains, sea etc.), travelling, overall observation of halls, shopping, religion, home school, home security, connection to services related to digital music, newspapers and books, or related devices, such as Audible Player, mobile player (Audible Inc.), interactive data communication television, electric commerce, connection to a TV-telephone capable of data communication, connection to a PDA (portable information terminal), such as V-phonet (Tietech Co.), advertisement, cooking, use in dactylology (example: hand-language interpreting-generating system hand language animation software (Mimehand HITACHI)), underwater operations, such as underwater conversation and communication during diving.

In the HA 1, an application program indicating the processing executed on a routine personal computer, such as preparation of documents, image processing, internet or e-mail, may be stored in the storage unit 24 for execution.

### Industrial Utilizability

The speech transformation apparatus according to the present invention includes transforming means for working on and transforming the result of recognition from said recognition means, obtained on detecting the speech by acousto-electric transducing means and on processing the detected speech with speech recognition processing, depending on the bodily state, the using state or the using objectives of the user, and output means for outputting the result of recognition, obtained on working and transformation depending on the bodily state, the using state or the using objectives of the user, not only can the information representing the meaning and contents of the speech by e.g., a picture pattern, not only the speech but also the image can be used to compensate for the user's acoustic sense.

The speech transformation method detects the speech to generate speech signals, performs speech recognition processing using speech signals from acousto-electric transducing means, works on or transforms the result of recognition depending on the bodily state, the using state or the using objectives of the user, and outputs the result of recognition depending on the bodily state, the using state or the using objectives of the user, not only can the information representing the meaning and contents of the speech by e.g., a picture pattern, not only the speech but also the image can be used to compensate for the user's acoustic sense.

## Claims

1. A speech transformation apparatus comprising;
an acousto-electric transducing means (21) for converting speech uttered by a speaker into speech signals;
an electric-acousto transducing means (21) for converting signals into sound;
a signal processor (22) adapted to receive the speech signals from the acousto-electric means and perform speech recognition processing on the received speech signals wherein the signal processor is adapted to recognise disordered speech of the speaker and produce recognised speech information, and
a speech information generation unit (23) arranged to receive the recognised speech from the signal processor (22) and to transform the recognised speech information into an image signal for output as an image on a display means (26) and to transform the recognised speech into a transformed speech signal for output as speech via the electro-acoustic transducing means by converting the transformed speech signal into sound, wherein
the speech transformation apparatus further comprises a data storage means (24) in which is stored speech data generated on sampled speech uttered by said speaker without a voice-speech disorder and the speech information generation unit (23) is arranged to generate the transformed speech signal for outputting as speech using the speech memorized in said storage means (24), and the speech information generating unit (23) is arranged to adjust the speech content of the recognised speech information or the sound pitch or the sound volume using text to speech synthesis in accordance with properties of the user's hearing impairment.

2. The speech transformation apparatus according to claim 1 wherein said storage means (24) memorizes speech data generated before said speaker underwent surgery.

3. The speech transformation apparatus according to claim 1 wherein said speech information generation unit (23) includes data storage means (24) having stored therein data indicating a pattern for presentation on said display means (26), and based on the recognised speech received from the signal processor (22) the speech information generation unit (23) is operable to output the pattern indicated by said data on said display means (26).

4. The speech transformation apparatus according to claim 1 wherein said speech information generation unit (23) generates a control signal so that an image will be presented on said display means (26) for the speech uttered by the speaker and/or a person other than the speaker, said speech information generation unit (23) amplifying the sound pressure level of the speech uttered by the speaker and/or a person other than the speaker for outputting the sound as speech from said electro-acoustic transducing means (21).

5. The speech transformation apparatus according to claim 1 wherein said speech information generation unit (23) generates a control signal, responsive to the recognised speech information, for presenting the meaning and the contents of the speech uttered by the speaker.

6. The speech transformation apparatus according to claim 1 wherein the display means (26) and the electro-acoustic transducing means are detachable with respect to the speaker.

7. The speech transformation apparatus according to claim 1 wherein the speech is fed through a communication network to said acousto-electric transducing means (21) and wherein a communication means outputs the recognised speech signal from said speech information generation unit (23) to said communication network.

8. The speech transformation apparatus according to claim 1 wherein said signal processor (22) performs speaker recognition processing on the input speech to generate the recognised speech signal associated with each speaker; and wherein
said speech information generation unit (23) presents the information pertinent to the speaker to a person other than the speaker.

9. The speech transformation apparatus according to claim 1 further comprising:
imaging means for photographing an image;
said imaging means outputting the photographed image at least to display means (26).

10. The speech transformation apparatus according to claim 9 wherein said imaging means performs image transforming processing on the photographed image based on the visual acuity of the speaker to output the transformed image to said display means (26).

11. The speech transformation apparatus according to claim 9 wherein said imaging means is detachable with respect to the speaker.

12. The speech transformation apparatus according to claim 1 wherein a communication means is connected to an external equipment contained in an external network; and wherein
data from an external equipment is outputted as result of recognised speech signals.

13. The speech transformation apparatus according to claim 12 wherein said communication means outputs speech signals, generated by said acousto-electric transducing means (21), recognised speech information obtained by said signal processor (22) to obtain the transformed speech signal and/or image signal from said external equipment.

14. The speech transformation apparatus according to claim 12 wherein said communication means receives a program adapted for changing processing contents of said signal processor (22) and said speech information generation unit (23) from an external equipment; and wherein
said signal processor (22) and said speech information generation unit (23) generates the recognised speech signal based on said program received by said communication means.

15. The speech transformation apparatus according to claim 1 wherein said speech information generation unit (23) controls output of the recognised speech signal and the transformed speech signal simultaneously or with a time difference.

16. The speech transformation apparatus according to claim 1 wherein said acousto-electric transducing means (21), signal processor (22), speech information generation unit (23), the display means (26) and the electro-acoustic transducing means are designed as respective plural devices, and wherein
the respective devices are interconnected over a radio route to transmit/receive at least the recognised speech signal and the transformed speech signal.

17. The speech transformation apparatus to claim 1 wherein said acousto-electric transducing means (21) detects the speech uttered using auxiliary means or devices used for correcting voice-speech disorders, as the speech uttered by a person with a voice-speech disorder, to generate speech signals.

18. The speech transformation apparatus according to claim 17 wherein said acousto-electric transducing means (21) detects the speech uttered using speech production substitutes, as speech uttered by a person with voice-speech disorders, to generate speech signals.

19. The speech transformation apparatus according to claim 17 wherein said acousto-electric transducing means (21) detects speech uttered by a person with voice-speech disorders, using a technique used for correcting the voice-speech disorders, other than the speech production substitutes, as the speech uttered with voice-speech disorders, to generate speech signals.

20. The speech transformation apparatus according to claim 1 wherein said speech information generation unit (23) includes first transforming means for performing working and transformation operations to present the transformed speech signal as an image, and second transforming means for performing working and transformation operations to output the transformed speech signal as speech

21. A speech transformation method comprising;
converting speech uttered by a speaker into speech signals using a acousto-electric transducing means (21);
performing speech recognition processing on the speech signals to recognise disordered speech of the speaker and to produce recognised speech information;
transforming the recognised speech information into an image signal for output as an image on a display means (26) and transforming the recognised speech into a transformed speech signal for output as speech via an electro-acoustic transducing means (25) for converting the transformed speech signal into sound, wherein
the transformed speech signal for output as speech is generated using previously sampled speech data uttered by said speaker and memorized in storage means (24), and the transforming the recognised speech information includes adjusting the speech content of the recognised speech information or the sound pitch or the sound volume using text to speech synthesis in accordance with properties of the user's hearing impairement.

## Patentansprüche

1. Sprachtransformationsvorrichtung mit:
einem akusto-elektrischen Wandlemittel (21) zum Umwandeln von einem Sprecher geäußerter Sprache in Sprachsignale,
einem elektro-akustischen Wandlermittel zum Umwandeln von Signalen in Töne,
einem Signalprozessor (22), der so eingerichtet ist, dass er die Sprachsignale von dem akusto-elektrischen Mittel empfängt und eine Spracherkennungsverarbeitung auf die empfangenen Sprachsignale anwendet, wobei der Signalprozessor so eingerichtet ist, dass er Sprache mit Fehlfunktionen des Sprechers erkennt und erkannte Sprachinformation erzeugt, und
einer Sprchinformationserzeungungseinheit (23), die so eingerichtet ist, dass sie die erkannte Sprache von dem Signalprozessor (22) empfängt und die erkannte SprachInformation in ein Bildsignal zur Ausgabe als ein Bild auf einem Anzeigemittel (26) umwandelt und die erkannte Sprache in ein umgewandeltes Sprachsignal zur Ausgabe als Sprache über das elektro-akustische Wandlermittel transformiert durch Umwandeln des gewandelten Sprachsignals in Ton, wobei die Sprachtransformationsvorrichtung darüber hinaus ein Datenspeichermittel (24) aufweist, in dem Sprachdaten gespeichert sind, die aus beispielhafter Sprache erzeugt sind, die von dem Sprecher ohne eine Stimmsprechfunktionssörung gesammelt wunden, und die Sprachinformationserzeugungseinheit (23) ist so eingerichtet,
dass sie das transformierte Sprachsignal zur Ausgabe als Sprache erzeugt, wobei die In dem Speichermittel (24) gespeicherte Sprache verwendet wird und die Sprachinformationszeugungseinheit (23) so eingerichtet ist, dass sie den Sprachinhalt der erkannten Sprachinformation oder die Tonlage oder das Tonvolumen einstellt, wobei die Text-zu-Sprache-Synthese gemäß Elgenschaften der Minderung des Hörvermögens des Benutzers verwendet wird.

2. Sprachtransformationsvorrichtung nach Anspruch 1, **dadurch gekennzeichnet, dass** das Speichermittel (24) Sprachdaten speichert, die erzeugt wurden, bevor der Sprecher einer Operation unterzogen wurde.

3. Sprachtransformationsvorrichtung nach Anspruch 1, **dadurch gekennzeichnet, dass** die Sprachinformationserzeugungseinheit (23) ein Datenspelchermittel (24) aufweist, das darauf Daten gespeichert aufweist, die ein Muster zur Darstellung auf dem Anzeigemittel (26) verkörpem und wobei die Sprachinformationserzeugungseinhelt (23), basierend auf der von dem Signalprozessor (22) empfangenen erkannten Sprache so betreibbar ist, dass sie das von den Daten bezeichnete Muster auf dem Anzeigemittel (26) ausgibt.

4. Sprachtransformationsvorrichtung nach Anspruch 1, wobei die Sprachinfomrationserzeugungseinheit (23) ein Steuersignal erzeugt, so dass ein Bild auf dem Anzeigemittel (26) für die von dem Sprecher und/oder einer anderen Person als dem Sprecher geäußerte Sprache dargestellt wird, wobei die Sprachinformationsorzeugungseinheit (23) das Tondruckniveau der von dem Sprecher und/oder der anderen Person als dem Sprecher geäußerten Sprache zum Ausgeben des Tons als Sprache durch den elektro-akustischen Wandler (21) verstärkt.

5. Sprachtransformationsvorrichtung nach Anspruch 1, **dadurch gekennzeichnet, dass** die Sprachinformationserzeugungselnhelt (23) als Reaktion auf die erkannte Sprachinformation ein Steuersignal erzeugt zum Darstellen der Bedeutung und des Inhalts der von dem Sprecher geäußerten Sprache.

6. Sprachtransformationsvorrichtung nach Anspruch 1, **dadurch gekennzeichnet, dass** das Anzeigemittel (26) und das elektro-akustische Wandlermittel in Bezug auf den Sprecher abnehmbar sind.

7. Sprachtransformationsvorrichtung nach Anspruch 1, **dadurch gekennzeichnet, dass** die Sprache durch ein Kommunikationsnetzwerk zu den akusto-elektrischen Wandlermittel (21) geführt wird und wobei ein Kommunikationsmittel das erkannte Sprachsignal aus der Sprachinformationserzeugungseinheit (23) in das Kommunikationsnetzwerk ausgibt.

8. Sptachtransformationsvorrichtung nach Anspruch 1, **dadurch gekennzeichnet, dass** der Signalprozessor (22) eine Sprachererkennungsverarbeitung auf die Eingabesprache anwendet, um das erkannte Sprachsignal dem Sprecher zugeordnet zu erzeugen, und wobei
die Sprachinformationserzeugungseinhelt (23) die dem Sprechen zugeordnete Information einer anderen Person als dem Sprecher darstellt.

9. Sprachtransformationsvorrichtung nach Anspruch 1, darüber hinaus mit:
einem Abbildungsmittel zum Fotografieren eines Bildes,
wobei das Abbildungsmittel das fotografierte Bild mindestens an das Anzeigemittel (26) ausgibt.

10. Sprachtransformationsvorrichtung nach Anspruch 9, **dadurch gekennzeichnet, dass** das Bildgebungsmittel eine Bildtransformationsverarbeitung auf das fotografierte Bild anwendet, basierend auf der Sehschärfe des Sprechers, so dass das transformierte Bild an das Anzeigemittel (26) ausgegeben wird.

11. Sprachtransformationsvorrichtung nach Anspruch 9, wobei das Bildgebungsmittel in Bezug auf den Sprecher abnehmbar ist.

12. Sprachtransformationsvorrichtung nach Anspruch 1, **dadurch gekennzeichnet, dass** ein Kommunikationsmittel mit einer externen Einrichtung, die in einem externen Netzwerk enthalten ist, verbunden ist, und wobei Daten von einer externen Einrichtung als Folge erkannter Sprachsignale ausgegeben werden.

13. Sprachtransformationsvorrichtung nach Anspruch 12, **dadurch gekennzeichnet, dass** das Kommunikationsmittel Sprachsignale, die von dem akusto-elektrischen Wandlermittel (21) erzeugt wurden, erkannte Sprachinformation, die von dem Signalprozessor (22) erhalten wurde, um das transformierte Sprachsignal zu erhalten und/oder ein Bildsignal von der externen Einrichtung ausgibt.

14. Sprachtransformationsvorrichtung nach Anspruch 12, **dadurch gekennzeichnet, dass** das Kommunikationsmittel ein Programm von einer externen Einrichtung empfängt, das so eingerichtet ist, dass es den Verarbeitungsinhalt des Signalprozessors (22) und der Sprarhinformationserzeungunseinheit (23) ändert, und wobei der Signalprozessor (22) und die Sprachinformationserzeungungseinheit (23) das erkannte Sprachsignal, basieren auf dem von dem Kommunikationsmittel empfangenen Programm erzeugt.

15. Sprachtransformationsvorrichtung nach Anspruch 1, **dadurch gekennzeichnet, dass** die Sprachinformationserzeugungseinheit (23) die Ausgabe des erkannten Sprachsignals und des transformierten Sprachsignals gleichzeitig oder mit einer Zeitverzögerung steuert.

16. Spmohtransformationsvorrichtung nach Anspruch 1, **dadurch gekennzeichnet, dass** das akusto-elektrtsche Wandlermittel (21), der Signalprozessor (22), die Sprachinformationserzeugungseinheit (23), das Anzeigemittel (26) und das elektro-akustische Wandlermittel als eine entsprechende Mehrzahl von Einrichtungen konstruiert sind und wobei
die entsprechenden Einrichtungen über eine Funkverbindung miteinander verbunden sind, um mindestens das erkannte Sprachsignal und das transformierte Sprachsignal zu senden/zu empfangen.

17. Sprachtfansformationsvorrichtung nach Anspruch 1, **dadurch gekennzeichnet, dass** das akusto-elektrische Wandlermittel (21) Sprache, die geäußert wurde, wobei Hilfsmittel oder Vorrichtungen benutzt wurden, die zum Korrigieren von Stimm-Sprech-Fehlfunktion verwendet werden, als die von einer Person mit einer Stimm-Sprech-Fehlfunktion geäußerte Sprache erkennt, um Sprachsignale zu erzeugen.

18. Sprachtransformationsvorrichtung nach Anspruch 17, **dadurch gekennzeichnet, dass** das akusto-elektrische Wandlermittel (21) die Sprache, die geäußert wurde, wobei Sprachproduktionsersatzmlttel verwendet wurden, als die von einer Person mit Stimm-Sprech-Fehlfunktionen geäußerte Sprache erkennt, um Sprachsignale zu erzeugen.

19. Sprachtransformationsvorrichtung nach Anspruch 17, **dadurch gekennzeichnet, dass** das akusto-elektrische Wandlermittel (21) von einer Person mit Stimm-Sprech-Fehlfunktionen geäußerte Sprache als die Sprache, die mit Stimm-Sptech-Fehlfunktionen geäußert wurde, erkennt, wobei eine Technik verwendet wird, die zum Korrigieren der Stimm-Sprech-Fehlfunktionen benutzt wird, anders als die Sprachproduktionsersatzmittel, um Sprachsignale zu erzeugen.

20. Sprachtransformationsvorrichtung nach Anspruch 1, **dadurch gekennzeichnet, dass** die Sprachinformationserzeugungseinhelt (23) ein erstes Wandlermittel zum Ausführen von Bearbeitungs- und Transformationsoperationen umfasst, um das transformierte Sprachsignal als ein Bild darzustellen, und ein zweites Wandlermittel zum Ausführen von Bearbeitungs- und Transformationsoperationen, um das transformierte Sprachsignal als Sprache auszugeben.

21. Sprachtransformationsverfahren mit:
Umwandeln von von einem Sprecher geäußerter Sprache in Sprachsignale, wobei ein akusto-elektrisches Wandlermittel (21) verwendet wird,
Anwenden von Spracherkennungsverarbeitung auf die Sprachsignale, so dass eine Sprache mit Fehlfunktion des Sprechers erkannt wird und erkannte Sprachinformation erzeugt wird.
Umwandeln der erkannten Sprachinformation in ein Bildsignal zur Ausgabe als ein Bild auf einem Anzeigemittel (26) und zum Umwandeln der erkannten Sprache in ein umgewandeltes Sprachsignal zur Ausgabe als Sprache über ein elektro-akusbches Wandlermittel (25) zum Umwandeln des transformierten Sprachsignals in Ton, wobei das transformierte Sprachsignal zur Ausgabe als Sprache erzeugt wird, wobei zuvor aufgenommene Sprachdaten, die von dem Sprecher geäußert wurden, in einem Speichermittel (24) gespeichert wurden, verwendet werden und wobei das Transformieren der erkannten Sprachinformation ein Anpassen des Sprachinhalts der erkannten Sprachinformation oder der Tonhöhe oder des Tonvolumens umfasst, wobei Text zu Sprach-Synthese gemäß Eigenschaften des Hörvermögens des Benutzers verwendet werden.

## Revendications

1. Dispositif de conversion de la parole comprenant :
un moyen transducteur acousto-électrique (21) pour convertir les paroles prononcées par une personne en signaux de parole ;
un moyen transducteur électroacoustique (25) pour convertir des signaux en son ;
un processeur de signal (22) apte à recevoir les signaux de parole du moyen acousto-électrique et à effectuer un traitement de reconnaissance de parole sur les signaux de parole reçus, dans lequel le processeur de signal est apte à reconnaître des paroles troublées de la personne et à produire des informations de paroles reconnues ; et
une unité de génération d'informations de paroles (23) agencée pour recevoir les paroles reconnues du processeur de signal (22) et pour convertir les informations de paroles reconnues en un signal d'image à délivrer en tant qu'image sur un moyen d'affichage (26) et pour convertir les paroles reconnues en un signal de paroles converties à délivrer en tant que paroles par le biais du moyen transducteur électroacoustique en convertissant le signal de paroles converties en son, dans lequel le dispositif de conversion de la parole comprend en outre un moyen de stockage de données (24) dans lequel sont stockées les données de paroles générées sur des échantillons de paroles prononcées par ladite personne sans trouble de la parole et
l'unité de génération d'informations de paroles (23) est agencée pour générer le signal de paroles converties à délivrer en tant que paroles en utilisant les paroles mémorisées dans ledit moyen de stockage (24), et l'unité de génération d'informations de paroles (23) est agencée pour ajuster le contenu de paroles des informations de paroles reconnues ou le ton de son ou le volume de son en utilisant la synthèse de texte en paroles en fonction des propriétés du trouble de l'audition de l'utilisateur.

2. Dispositif de conversion de la parole selon la revendication 1, dans lequel ledit moyen de stockage (24) mémorise les données de paroles générées avant l'opération chirurgicale de ladite personne.

3. Dispositif de conversion de la parole selon la revendication 1, dans lequel ladite unité de génération d'informations de paroles (23) comprend un moyen de stockage de données (24) dans lequel sont stockées des données indiquant un motif à présenter sur ledit moyen d'affichage (26), et sur la base des paroles reconnues reçues du processeur de signal (22) l'unité de génération d'informations de paroles (23) est utilisable pour délivrer le motif indiqué par lesdites données sur ledit moyen d'affichage (26).

4. Dispositif de conversion de la parole selon la revendication 1, dans lequel ladite unité de génération d'informations de paroles (23) génère un signal de commande de manière à ce qu'une image soit présentée sur ledit moyen d'affichage (26) pour les paroles prononcées par ladite personne et/ou quelqu'un d'autre, ladite unité de génération d'informations de paroles (23) amplifiant le niveau de pression sonore des paroles prononcées par ladite personne et/ou quelqu'un d'autre pour délivrer le son en tant que paroles dudit moyen transducteur acousto-électrique (21).

5. Dispositif de conversion de la parole selon la revendication 1, dans lequel ladite unité de génération d'informations de paroles (23) génère un signal de commande en réponse aux informations de paroles reconnues pour présenter la signification et le contenu des paroles prononcées par ladite personne.

6. Dispositif de conversion de la parole selon la revendication 1, dans lequel le moyen d'affichage (26) et le moyen transducteur électroacoustique peuvent être enlevés de ladite personne.

7. Dispositif de conversion de la parole selon la revendication 1, dans lequel les paroles sont fournies par le biais d'un réseau de communication au dit moyen transducteur acousto-électrique (21) et dans lequel un moyen de communication délivre le signal de paroles reconnues de ladite unité de génération d'informations de paroles (23) au dit réseau de communication.

8. Dispositif de conversion de la parole selon la revendication 1, dans lequel ledit processeur de signal (22) effectue un traitement de reconnaissance de la personne sur les paroles entrées pour générer le signal de paroles reconnues associé à chaque personne ; et dans lequel
ladite unité de génération d'informations de paroles (23) présente les informations pertinentes à ladite personne à quelqu'un d'autre.

9. Dispositif de conversion de la parole selon la revendication 1, comprenant en outre :
un moyen d'imagerie pour photographier une image ;
ledit moyen d'imagerie délivrant l'image photographiée au moins au moyen d'affichage (26).

10. Dispositif de conversion de la parole selon la revendication 9, dans lequel ledit moyen d'imagerie effectue un traitement de conversion d'image sur l'image photographiée sur la base de l'acuité visuelle de ladite personne pour délivrer l'image convertie au dit moyen d'affichage (26).

11. Dispositif de conversion de la parole selon la revendication 9, dans lequel ledit moyen d'imagerie peut être enlevé de ladite personne.

12. Dispositif de conversion de la parole selon la revendication 1, dans lequel un moyen de communication est connecté à un équipement externe contenu dans un réseau externe ; et dans lequel
les données d'un équipement externe sont délivrées en conséquence des signaux de paroles reconnues.

13. Dispositif de conversion de la parole selon la revendication 12, dans lequel ledit moyen de communication délivre des signaux de paroles générés par ledit moyen transducteur acousto-électrique (21), les informations de paroles reconnues obtenues par ledit processeur de signal (22) pour obtenir le signal de paroles converties et/ou le signal d'image dudit équipement externe.

14. Dispositif de conversion de la parole selon la revendication 12, dans lequel ledit moyen de communication reçoit un programme apte à changer le contenu de traitement dudit processeur de signal (22) et de ladite unité de génération d'informations de paroles (23) à partir d'un équipement externe ; et dans lequel ledit processeur de signal (22) et ladite unité de génération d'informations de paroles (23) génèrent le signal de paroles reconnues sur la base dudit programme reçu par ledit moyen de communication.

15. Dispositif de conversion de la parole selon la revendication 1, dans lequel ladite unité de génération d'informations de paroles (23) commande la sortie du signal de paroles reconnues et du signal de paroles converties simultanément ou avec une différence de temps.

16. Dispositif de conversion de la parole selon la revendication 1, dans lequel ledit moyen transducteur acousto-électrique (21), le processeur de signal (22), l'unité de génération d'informations de paroles (23), le moyen d'affichage (26) et le moyen transducteur électroacoustique sont conçus en tant que plusieurs dispositifs respectifs, et dans lequel
les dispositifs respectifs sont interconnectés sur une voie radio pour transmettre/recevoir au moins le signal de paroles reconnues et le signal de paroles converties.

17. Dispositif de conversion de la parole selon la revendication 1, dans lequel ledit moyen transducteur acousto-électrique (21) détecte les paroles prononcées en utilisant un moyen auxiliaire ou des dispositifs utilisés pour corriger un trouble de la parole, en tant que paroles prononcées par une personne avec un trouble de la parole, pour générer des signaux de paroles.

18. Dispositif de conversion de la parole selon la revendication 17, dans lequel ledit moyen transducteur acousto-électrique (21) détecte les paroles prononcées en utilisant des substituts à la production de la parole, en tant que paroles prononcées par une personne avec un trouble de la parole, pour générer des signaux de paroles.

19. Dispositif de conversion de la parole selon la revendication 17, dans lequel ledit moyen transducteur acousto-électrique (21) détecte les paroles prononcées par une personne avec un trouble de la parole, en utilisant une technique employée pour corriger le trouble de la parole, autre que les substituts à la production de la parole, en tant que les paroles prononcées avec un trouble de la parole, pour générer des signaux de paroles.

20. Dispositif de conversion de la parole selon la revendication 1, dans lequel ladite unité de génération d'informations de paroles (23) comprend un premier moyen de conversion pour effectuer des opérations de travail et de conversion pour présenter le signal de paroles converties sous forme d'une image, et un second moyen de conversion pour effectuer des opérations de travail et de conversion pour délivrer le signal de paroles converties sous forme de paroles.

21. Procédé de conversion de la parole comprenant :
la conversion des paroles prononcées par une personne en signaux de parole en utilisant un moyen transducteur acousto-électrique (21) ;
l'exécution d'un traitement de reconnaissance de parole sur les signaux de parole pour reconnaître des paroles troublées de la personne et pour produire des informations de paroles reconnues ;
la conversion des informations de paroles reconnues en un signal d'image à délivrer en tant qu'image sur un moyen d'affichage (26) et la conversion des paroles reconnues en un signal de paroles converties à délivrer en tant que paroles par le biais d'un moyen transducteur électroacoustique (25) pour convertir le signal de paroles converties en son, dans lequel
le signal de paroles converties à délivrer en tant que paroles est généré en utilisant les données de paroles précédemment échantillonnées prononcées par ladite personne et mémorisées dans un moyen de stockage (24), et la conversion des informations de paroles reconnues comprend l'ajustement du contenu de paroles des informations de paroles reconnues ou du ton de son ou du volume de son en utilisant la synthèse de texte en paroles en fonction des propriétés du trouble de l'audition de l'utilisateur.
